# EUROPÄISCHE PATENTSCHRIFT

(11) **EP 1 566 371 B1**
(45) Veröffentlichungstag und Bekanntmachung des Hinweises auf die Patenterteilung: **07.05.2008**
(21) Anmeldenummer: 04030637.5
(22) Anmeldetag: 23.12.2004
(51) Int. Cl.: C04B 41/81, C03C 17/00, B05D 1/14

(54) **Form-Produkt mit veränderter Oberfläche**
Surface-modified shaped article
Pièce à suface modifiée

(30) Priorität: 18.02.2004 DE 102004007918
(43) Veröffentlichungstag der Anmeldung: 24.08.2005
(73) Patentinhaber: KAHLA/Thüringen Porzellan GmbH, 07768 Kahla (DE)
(72) Erfinder: Fleckenstein, Sybille, 63067 Offenbach (DE); Schwer, Thilo, 63067 Offenbach (DE); Pohlmann, Jens, 63067 Offenbach (DE)
(74) Vertreter: Koepe, Gerd L.

(56) Entgegenhaltungen:
- EP-A- 0 460 532
- DE-A1- 1 901 934
- DE-A1- 3 730 477
- DE-A1- 10 012 846
- DE-C1- 10 058 090
- PATENT ABSTRACTS OF JAPAN Bd. 016, Nr. 219 (C-0943), 22. Mai 1992 (1992-05-22) & JP 04 042881 A (INAX CORP), 13. Februar 1992 (1992-02-13)
- DATABASE WPI Section Ch, Week 198846 Derwent Publications Ltd., London, GB; Class A96, AN 1988-327450 XP002336378 & JP 63 242249 A (NGK SPARK PLUG CO LTD) 7. Oktober 1988 (1988-10-07)

## Beschreibung

Die vorliegende Erfindung betrifft ein Form-Produkt, insbesondere ein Keramik-Produkt oder Glas-Produkt, mit berührungsfreundlicher Oberfläche. Insbesondere betrifft die Erfindung ein Form-Produkt, insbesondere ein Keramik-Produkt, dessen Oberfläche - oder zumindest ein Teil oder mehrere Teile davon - mit einem Material beschichtet ist/sind, das beim Berühren ein angenehmes Gefühl vermittelt. Die Erfindung betrifft auch Verfahren zur Herstellung eines derartigen Form-Produktes, insbesondere Keramik-Produktes, und betrifft dessen Verwendung, beispielsweise in Haushalt, Laboratorium, Baubranche und Industrie.

Es sind im Stand der Technik Materialien bekannt, die auf Oberflächen unterschiedlichster Natur aufgebracht werden können, um die bestimmte Eigenschaften der Oberflächen zu verändern. Dies können beispielsweise haptische oder optische Eigenschaften sein, also Eigenschaften, die im Zusammenhang mit der Berührung oder der Ansicht des jeweiligen Materials stehen, aber auch Eigenschaften technischer Art, wie beispielsweise Rutschfestigkeit, mangelnde Wärmeleitfähigkeit oder Schmutzabweisevermögen. So werden beispielsweise in der Automobilindustrie bzw. bei Automobil-Zubehör- oder -Inneneinrichtungs-Teilen Kunststoff-Flächen mit einem Kunststoff-Flock-Material beschichtet, um ein angenehmes Gefühl beim Berühren solcher beschichteter Kunststoff-Flächen zu vermitteln. Weiter werden solche beflockten Flächen als optisch attraktiver als die "blanken" Kunststoff-Flächen angesehen. Von Vorteil ist auch, daß solche Flächen zumindest optisch weniger schnell den Eindruck von Verschmutzung vermitteln als Kunststoff-Oberflächen, die häufig Staub anziehen und dann optisch unschön erscheinen, wenn sie nicht regelmäßig gereinigt werden. Bei Sonnenbestrahlung, z. B. im Sommer, können glatte Kunststoff-Flächen und -Teile (insbesondere wenn sie dunkel eingefärbt sind) so heiß werden, daß man sie kaum berühren kann; dies wird nicht so empfunden, wenn sie mit einem Kunststoff-Flock-Material beschichtet sind.

Beispiele für Kunststoff-Teile und Kunststoff-Flächen im Automobil-Bereich, für die inzwischen häufig Flock-Beschichtungen vorgesehen werden, sind Fenster- und Türprofile von Fahrzeugen, Ablageflächen (z. B. das sog. "Handschuhfach"), Tür-Innenverkleidungen und der Fahrzeug-Himmel. Vergleichbare Beschichtungen finden sich auch bei Möbeln (z. B. Beschichtung der Sitzfläche von Kunststoff-Stühlen) oder bei Textilien. Über Flock-Beschichtungen von Keramik-Materialien, Glasmaterialien oder ähnlichen Form-Produkten wurde bisher nicht berichtet.

Die Druckschrift DE-A 100 12 846 betrifft beispielsweise eine mit einem Flock-Material beschichtete Sonnenblende für ein Kraftfahrzeug. Diese besteht aus einem inneren Drahtrahmen, der die flächige Form der späteren Sonnenblende vorgibt. Die flächige, stabile Gestalt der Sonnenblende wird erreicht durch eine Sandwichbauweise. Dabei wird das Innere des Drahtrahmens durch eine verstärkende Pappschicht ausgefüllt, und auf die großflächigen Seiten der Pappschicht wird den Drahtrahmen bedeckend eine Schaumstoff-Schicht aufgeklebt. Abschließend wird die Sandwich-Struktur mit Stoff ummantelt.

In gleicher Weise offenbart die Druckschrift DE-A 100 58 090 ein Verfahren zum Herstellen von Kunststoff-Formteilen- bei dem auf einem flächigen Träger eine Schicht aus vernetzbarem Kunststoff aufgebracht wird, die noch nicht vernetzte Kunststoff-Schicht beflockt wird und der Kunststoff anschließend vernetzt wird. Die so erhaltene Kunststoff-Schicht wird dann mit einer geeigneten Unterlage verbunden und/oder mit einem Kunststoff zur Stützung hinterspritzt.

Aufgabe der vorliegenden Erfindung ist, Form-Produkte wie beispielsweise Gegenstände aus Keramik oder Glas bereitzustellen, deren Oberflächen zumindest teilweise mit einem Material beschichtet sind, das der jeweiligen Oberfläche ein gutes Aussehen und ein angenehmes haptisches Berühr-Gefühl vermittelt. Es ist eine weitere Aufgabe der vorliegenden Erfindung, Form-Produkte wie beispielsweise Gegenstände aus Keramik oder Glas bereitzustellen, die mit einem Material beschichtet sind, das technische Vorteile gegenüber der unbeschichteten Keramik- oder Glas-Material-Oberfläche hat. Aufgabe der Erfindung ist weiter, ein Verfahren zur Herstellung solcher beschichteter Form-Produkte wie beispielsweise Gegenstände aus Keramik oder Glas bereitzustellen. Letztlich ist Aufgabe der Erfindung auch die Verwendung solcher mit einer Schicht überzogenen Formprodukte wie beispielsweise Gegenstände aus Keramik oder Glas, beispielsweise in Haushalt, Laboratorium, Baubranche oder Industrie.

Überraschend wurde nämlich gefunden, daß man keramische Oberflächen, Glas-Oberflächen oder Oberflächen anderer Werkstoffe ganz oder teilweise dauerhaft mit samtweichen Fasern beschichten kann. So gewonnene Form-Produkte aus Keramik-Material, Glas oder anderen Werkstoffen mit einer Beschichtung aus samtweichen Fasern auf zumindest einem Teil ihrer Oberfläche führen nicht nur zu erwünschten und als angenehm empfundenen optischen und haptischen Eigenschaften, sondern bieten auch überraschende technische Vorteile wie ein kaum wahrnehmbares Wärmeaufnahmevermögen, eine schlechte Wärmeleitfähigkeit, ein gutes Wärmeisolationsvermögen und eine bisher nicht für möglich gehaltene Beständigkeit gegen eine Reihe aggressiver Chemikalien wie beispielsweise Alkalien.

Die Erfindung betrifft ein Formprodukt, gemäß Patentanspruch 1.

Vorteilhafte Ausführungsformen des erfindungsgemäßen Formprodukts ergeben sich aus den abhängigen Ansprüchen 2 bis 8.

Die Erfindung betrifft auch ein Temperatur-gehärtetes Keramik-Formteil, das auf zumindest einem Teil seiner Oberfläche zumindest ein fest haftendes Faser-Flock-Material umfaßt.

Vorteilhafte Ausführungsformen des erfindungsgemäßen Keramik-Formteils sind in den abhängigen Ansprüchen 9 bis 12 und 14 beansprucht.

Die Erfindung betrifft auch Glas-Formteil, das auf zumindest einem Teil seiner Oberfläche zumindest ein fest haftendes Faser-Flock-Material umfaßt.

Vorteilhafte Ausführungsform des erfindungsgemäßen Glas-Formteils sind in den abhängigen Ansprüchen 9 und 13 und 14 beansprucht.

Die Erfindung betrifft auch ein Verfahren zur Herstellung eines auf zumindest einem Teil seiner Oberfläche ein fest haftendes Faser-Flock Material umfassenden Formprodukts gemäß Patentanspruch 15.

Vorteilhafte Ausführungsformen des Verfahrens sind in dem abhängigen Anspruch 16 beansprucht.

Die Erfindung betrifft auch ein Verfahren zur Herstellung eines Temperatur-gehärteten, auf zumindest einem Teil seiner Oberfläche zumindest fest haftendes Faser-Flock-Material umfassenden Keramik-Formteils gemäß Patentanspruch 17.

Die Erfindung betrifft auch ein Verfahren zur Herstellung eines auf zumindest einem Teil seiner Oberfläche zumindest ein fest haftendes Faser-Flock-Material umfassenden Glas-Formteils gemäß Patentanspruch 18.

Vorteilhafte Ausführungsformen der erfindungsgemäßen Verfahren sind in den abhängigen Ansprüchen 19 bis 31 beansprucht.

Die Erfindung betrifft auch die Verwendung des auf zumindest einem Teil seiner Oberfläche ein fest haftendes Material umfassenden Formprodukts in Haushalt, Laboratorium, Baubranche und Industrie, beispielsweise als Eßgeschirr, Trinkgeschirr, als Spiegel, im Bereich Sanitärkeramik, als Baumaterial (Ziegel, Fliesen, Bodenbelag etc.) usw..

Die Erfindung betrifft auch die Verwendung des erfindungsgemäßen Temperatur-gehärteten Keramik-Formteils oder Glas-Formteils mit zumindest auf einem Teil seiner Oberfläche aufgebrachtem Faser-Flock-Material für Haushaltszwekke, Laboratoriumszwecke, Bauzwecke oder industrielle Zwecke, von denen eine besonders bevorzugte Ausführungsform die Verwendung als Eßgeschirr, Trinkgeschirr bzw. Trinkglas oder Kochgeschirr ist.

Im Rahmen der vorliegenden Beschreibung und in den Patentansprüchen werden unter dem Begriff "Formprodukt" im weitesten Sinn durch Formen aus einer formlosen Masse auf beliebigem Wege hergestellte Gegenstände mit selbststehender Form verstanden, die einem Gebrauchszweck in Haushalt, Laboratorium, Bau, Industrie oder verwandten Gebieten dienen können. Die Anwendungsbereiche sind dabei nicht beschränkt. Sie umfassen beispielsweise, jedoch nicht beschränkend, Gegenstände aus Keramik, insbesondere Porzellan, Glas, Kunststoffen (Polymeren jeder Art), Holz, Metall oder beliebigen, zwei oder drei oder mehr der genannten Materialien umfassenden Verbundmaterialien. Erfindungsgemäß bevorzugt sind Formprodukte aus Keramik, Porzellan, Glas und Metall, bei besonderer Bevorzugung von Keramik, Porzellan und Glas.

Im Rahmen der vorliegenden Beschreibung und in den Patentansprüchen werden unter dem Begriff "Keramik" oder unter dem Begriff "Keramik-Material" im weitesten Sinn alle aus anorganischen und überwiegend nichtmetallischen Verbindungen oder Elementen aufgebaute Materialien verstanden, die nach den klassischen Methoden der Keramik-Herstellung oder auch nach modernen Verfahren z. B. der Glaskeramik, Oxidkeramik oder Pulvermetallurgie hergestellt werden. Der vorangehend verwendete Begriff "nichtmetallische Verbindungen oder Elemente" bedeutet nicht, daß die Verbindungen keine Metalle enthalten können; bekanntermaßen sind wichtige keramische Rohstoffe wie beispielsweise Kaolinit oder Illit Mineralien, die Metalle (Aluminium, Silicium, Kalium) enthalten; vielmehr bedeutet der genannte Begriff, daß die unter "Keramik" fallenden Materialien weitgehend aus Verbindungen mit nichtmetallischem Charakter bestehen.

Im engeren Sinn werden erfindungsgemäß unter dem Begriff "Keramik" solche Materialien verstanden, die bei Raumtemperatur aus einer anorganischen, nichtmetallischen Keramik-Rohmasse geformt werden und ihre (zum Teil der weiteren Unterscheidung bzw. Einteilung dienenden) Eigenschaften durch einen nachfolgenden Trocknungs-Vorgang und einen sich an diesen anschließenden Brenn-Vorgang, genannt "Sintern", erhalten. Selbstverständlich fallen unter keramische Materialien im vorgenannten Sinn auch solche Materialien, die nach dem Sinter-Brand mit einer schützenden und/oder dekorativen Glasur versehen werden.

Besondere, nicht jedoch die vorliegende Erfindung beschränkende Beispiele keramischer Materialien sind tonkeramische Materialien, die hinsichtlich der Größe ihrer Gefüge-Bestandteile in grobe (Korngröße > 0,2 mm) und feine (Korngröße < 0,2 mm) tonkeramische Materialien unterschieden werden. Die erstgenannten stellen überwiegend Baustoffe und im industriellen Bereich verwendete Materialien dar, während die letztgenannten, unterschieden nach Tongut mit relativ hoher Porosität und damit einem höheren Wasseraufnahmevermögen (> 2 Massen-%) und Tonzeug mit relativ geringer Porosität bzw. relativ hoher Porendichte und damit einem geringeren Wasseraufnahmevermögen (< 2 Massen-%), im Laboratorium und insbesondere im Haushalt verwendet werden. Irdengut als beispielsweise durch Töpfern hergestelltes Material, Steingut als Geschirr oder Sanitärwaren, Steinzeug als beispielsweise für Sanitärwaren oder Fliesen geeignetes Material oder Porzellan als hochwertiges Geschirr können beispielhaft genannt werden. Alle genannten Materialien werden vom Begriff "Keramik" im Sinne der vorliegenden Erfindung umfaßt.

"Keramik-Materialien" im Sinne der vorliegenden Erfindung sind jedoch beispielsweise auch sonderkeramische Werkstoffe; zu deren nicht-erschöpfender Definition - wie auch zum Begriff "Keramik" entsprechend der Definition der vorliegenden Erfindung - wird verwiesen auf "Römpp's Lexikon der Chemie", 10. Auflage, Stichworte "Keramik" und "Keramische Werkstoffe", dessen Inhalt zur Definition des Begriffs "Keramik" durch die Inbezugnahme in die vorliegende Beschreibung übernommen wird.

Erfindungsgemäß wird hinsichtlich des Keramik-Materials des Keramik-Formteils keine Beschränkung gemacht. Es können also in bevorzugten Ausführungsformen der Erfindung sowohl unter den Begriff "Grobkeramik" fallende Keramik-Materialien als auch unter den Begriff "Feinkeramik" fallende Materialien verwendet werden. Besonders bevorzugt findet die Erfindung Anwendung für feinkeramische Materialien, und von diesen sind solche, die mindestens eine Glasurschicht oder sogar zwei oder mehr Glasur-Schichten auf dem Keramik-Material aufweisen, noch mehr bevorzugt, wobei Porzellan ganz besonders bevorzugt ist, da die Vorteile der Erfindung bei Porzellan besonders gut zur Geltung kommen. In besonders bevorzugten Ausführungsformen der Erfindung kann eine weiße Glasurschicht beispielsweise aus Kaolin, Kalkspat, Dolomit, Feldspat, Kaolinschamotte und/oder Quarzsand als Grundmaterialien unter Beimischung von beispielsweise SnO₂ oder ZrO₂ für eine undurchsichtige, weiße Glasurschicht bestehen, während farbige Glasurschichten beispielsweise eines oder mehrere derselben Grundmaterialien, wie sie vorstehend genannt wurden, und Metalloxide zur Farbgebung wie beispielsweise Cobaltoxid, Chromoxid, Kupferoxid, Manganoxid und/oder Eisenoxid umfassen.

Unter dem Begriff "Keramik-Formteil" wird in der vorliegenden Beschreibung und in den Patentansprüchen ein aus einem oder mehreren Keramik-Material(ien) bestehender Gegenstand verstanden, der durch ein (an sich aus diesem technischen Gebiet bekanntes) Formgebungsverfahren aus einer weitgehend ungeformten Rohmasse in eine selbststehende Form gebracht wurde. Das Formgebungsverfahren kann beispielsweise ein Modellierverfahren, ein Strangpreß-Verfahren, ein Gießverfahren (z. B. Schlickerguß oder Spritzguß), ein Pulververdichtungsverfahren (Feuchtpressen, Trockenpressen, Isostatik-Pressen) sein, ohne daß dies die vorliegende Erfindung beschränkt.

Der Begriff "Temperatur-gehärtet" wird in der vorliegenden Beschreibung und in den Patentansprüchen in der Weise verstanden, daß das Keramik-Formteil nach der Ausformung nach an sich bekannten Verfahren und bei an sich bekannten Bedingungen zumindest einem Trocknungsvorgang bei erhöhter Temperatur und geregelter, meist reduzierter Luftfeuchtigkeit unterzogen wurde. Dafür kommen alle an sich bekannten bzw. denkbaren Verfahren in Frage, beispielsweise (ohne Beschränkung hierauf) die sog. "Darren-" oder Freiluft-Trocknung, Schaukel-Trocknung, Kammer-Trocknung oder Tunneltrocknung. Diese laufen bekanntermaßen bei erhöhten Temperaturen (beispielsweise unter Nutzung der Abwärme paralleler Brennvorgänge anderer Keramik-Materialien), beispielsweise bei Temperaturen im Bereich von 50 bis 200 °C, und bei geregelter, beispielsweise geregelt reduzierter Luftfeuchtigkeit ab.

Unter "Temperatur-gehärtet" im engeren Sinn wird in der vorliegenden Beschreibung und in den Patentansprüchen verstanden, daß ein Keramik-Formteil nach der Ausformung sowohl (im vorgenannten Sinn) zumindest einem Trocknungsvorgang und anschließend zumindest einem keramischen Brand-Vorgang oder Sintervorgang unterzogen wurde. Die Temperaturen liegen bekanntlich bei > 800 °C und hängen stark von der Zusammensetzung des Keramik-Materials, der gewünschten Porosität bzw. Dichte des Keramik-Formteils und dem beabsichtigten Gebrauch des Fertigprodukts ab. Beispielsweise werden im sogenannten "Glattbrand" von Porzellan Temperaturen von 1350 °C bis 1400 °C angewandt.

Unter "Temperatur-gehärtet" im letztgenannten, engeren Sinn wird erfindungsgemäß auch verstanden, daß das bereits getrocknete und gesinterte Keramik-Formteil mit einer schützenden und/oder dekorativen Glasur versehen und diese auf ebenfalls an sich bekanntem Weg gebrannt bzw. gesintert wurde; auch dieser Vorgang findet bekanntermaßen bei erhöhter Temperatur statt, regelmäßig bei > 1000 °C, was wiederum von dem zur Glasur verwendeten Material, der gewünschten Dichte der Glasur und dem beabsichtigten Gebrauch des Fertigprodukts abhängt.

Aus den obigen Erläuterungen ergeben sich als bevorzugte, jedoch nicht beschränkende Beispiele für Formprodukte aus Keramik technische Keramik-Formteile (wie beispielsweise Isolatoren), Ziegel zum Dachdecken, Gegenstände der Sanitärkeramik (wie beispielsweise Waschbecken, Toilettenschüsseln, Bidetschüsseln, Badewannen, Duschtassen), Fliesen als Wand- oder Bodenbelag, Zier- und Gebrauchs-Gegenstände aus Keramik (wie beispielsweise Plastiken, Lampenschirme, Vasen, Schalen, Geschirr), Formteile aus Porzellan (wie beispielsweise Teller, Tassen, Schüsseln, Schalen, Vasen, Kannen, Figuren, Handgriffe für Besteck, Lampenschirme, Lüster), und andere.

Formprodukte gemäß der Erfindung können jedoch auch aus anderen Materialien bestehen. Beispiele hierfür sind Glas, Polymere ("Kunststoffe"), Holz, Metall oder Verbundstoffe aus einem oder mehreren der genannten Materialien.

Ein weiteres bevorzugtes Material ist Glas. Unter "Glas" wird erfindungsgemäß im weitesten Sinn ein Stoff im amorphen, nicht-kristallinen Festzustand im Sinne einer eingefrorenen, unterkühlten Schmelze verstanden; "Glas" im engeren Sinn ist im Rahmen der vorliegenden Erfindung definiert als anorganisches, oxidisches Schmelzprodukt, im wesentlichen umfassend SiO₂, Na₂O, gegebenenfalls (abhängig vom Verwendungszweck) andere Metalloxide wie CaO, MgO, K₂O, PbO sowie B₂O₃ und/oder Al₂O₃, das durch einen Einfriervorgang ohne Auskristallisieren der Schmelzphasen-Komponenten in den festen Zustand überführt wurde.

In weiter bevorzugten Ausführungsformen der Erfindung können die Formprodukte Gläser für Trinkzwecke (zum Beispiel Stielgläser aller denkbaren Ausführungsformen und Varianten für die verschiedensten Getränke), Haushaltsgläser, Teegläser, Gläser für das Befüllen mit unterschiedlichsten Materialien einschließlich Lebensmittel, Glasbehälter für Parfum (Duftflakons), Isoliergläser (Doppelwandgläser mit evakuiertem Raum zwischen den beiden Wänden) für Flüssigkeiten aller Art wie Kaffee oder Tee, flache oder geformte Scheiben für Fenster, Schutzwände, für Fahrzeuge, insbesondere Kraftfahrzeuge usw., für Spiegel sein, ohne die Erfindung im Bereich "Glas" hierauf zu beschränken. Ganz besonders bevorzugt sind Gläser für Trinkzwecke, Gläser für das Befüllen mit verschiedenen Materialien, beispielsweise mit Lebensmitteln, und Glasbehälter für Parfum.

Ebenfalls bevorzugte Formprodukte sind solche aus Polymeren oder Metallen. Beispiele hierfür sind Becher (einschließlich solcher für Haushaltszwecke oder für Laboratoriumszwecke), Dosen und andere Behälter zum Aufbewahren, Einfrieren oder Erhitzen (z. B. durch Mikrowellen) von Lebensmitteln oder für deren Schutz gegen äußere Einflüsse (beispielsweise Lichtstrahlung), Töpfe und Pfannen für Kochzwecke bevorzugte Beispiele.

In Übereinstimmung mit der Erfindung umfaßt ein Formprodukt gemäß der Erfindung auf zumindest einem Teil seiner Oberfläche zumindest ein fest haftendes Faser-Flock-Material, Unter "auf zumindest einem Teil seiner Oberfläche" wird im Rahmen der vorliegenden Erfindung verstanden, daß das mindestens eine Faser-Flock-Material die gesamte Oberfläche des Formprodukts bedecken und auf der gesamten Oberfläche des Formprodukts fest haften kann. Erfindungsgemäß bevorzugt ist die Ausführungsform, daß das mindestens eine Faser-Flock-Material nur auf einem Teil, besonders bevorzugt auf einem genau definierten Teil, der Oberfläche des Formprodukts vorhanden ist und dort fest haftet. Wie nachfolgend im einzelnen beschrieben wird, kann der Teil der Oberfläche des Formprodukts, auf dem das mindestens eine Faser-Flock-Material aufgebracht ist und fest haftet, allein oder zumindest weitgehend durch dekorative Zwecke bestimmt sein. In einer alternativen Ausführungsform ist es jedoch auch möglich, daß der Teil der Oberfläche des Formprodukts, auf dem das mindestens eine Eigenschaft der Formprodukt-Oberfläche verändernde Faser-Flock-Material aufgebracht ist und fest haftet, allein oder zumindest weitgehend durch Gebrauchszwecke bestimmt ist. Selbstverständlich ist es auch möglich, Kriterien bei der Bestimmung des Teils der Oberfläche des Formprodukts, auf dem das mindestens eine Eigenschaft der Formprodukt-Oberfläche aufgebracht ist und fest haftet, anzuwenden, die durch beide Gesichtspunkte (und gegebenenfalls auch weitere andere Gesichtspunkte) bestimmt sind.

Die feste Haftung des mindestens einen Faser-Flock-Materials auf zumindest einem Teil der Oberfläche des Formprodukts kann auf jedem Weg bewirkt werden, den der Fachmann für eine feste Haftung derartiger Materialien auf porösen, dichten oder sogar glatten Oberflächen kennt, ohne daß die Erfindung auf bestimmte Wege beschränkt ist. In der Erfindung wird die feste Haftung des mindestens einen Faser-Flock-Materials auf zumindest einem Teil, noch mehr bevorzugt auf einem Teil, der Oberfläche des Keramik-Formteils bewirkt durch Vermittlung einer Klebeschicht, die die mit dem mindestens einen Faser-Flock-Material zu beschichtende (Teil-) Oberfläche des Formprodukts bedeckt. Hinsichtlich des Klebers der Klebeschicht sind dem Fachmann keine Grenzen gesetzt, und es sind alle denkbaren Kleber geeignet, die ein festes Haften eines mindestens einen Faser-Flock-Materials auf der tatsächlich vorliegenden (Teil-) Oberfläche des Formprodukts bewirken. Im Einzelfall stehen dem Fachmann zahlreiche Kleber zur Verfügung, die sowohl mit dem Formprodukt-Material als auch mit dem mindestens einen Faser-Flock-Material, das Anwendung findet, sowie gegebenenfalls mit weiteren Erfordernissen (Chemikalienbeständigkeit, Lichtbeständigkeit, Lebensmittel-Kompatibilität, usw.) kompatibel sind.

Die erfindungsgemäß verwendbaren Materialien, mit deren Aufbringung auf zumindest einen Teil der Formprodukt-Oberfläche zumindest eine von deren Eigenschaften verändert werden kann, können ohne Beschränkung beliebige Materialien sein, die der Fachmann in diesem technischen Bereich für die Veränderung einer oder mehrerer Eigenschaft(en) der Oberfläche des Formprodukts kennt. In bevorzugten Ausführungsformen der Erfindung können die Materialien gewählt sein aus der Gruppe Filme zur Änderung der Transparenz und/oder des Brechungsindex der Oberfläche, Schichten zur Änderung des Glanzes der Oberfläche, Schichten zur Veränderung der Rauheit bzw. Glätte der Oberfläche, Schichten (wie beispielsweise Faser-Schichten) zur Veränderung der Textur der Oberfläche, Klebeschichten zur Veränderung der Klebrigkeit der Oberfläche, Isolationsschichten zur Veränderung der thermischen Eigenschaften der Oberfläche, Schutzschichten gegen schädigende Einflüsse von Licht, Chemikalien, Wasser und/oder Befall durch Mikroorganismen, wobei das/die Material(ien), das/die allein oder in Kombination verwendet werden kann/können, eine der vorgenannten Funktionen oder auch mehrere der vorgenannten Funktionen oder auch weitere Funktionen haben kann/können.

Erfindungsgemäß ist das Material, das mindestens eine Eigenschaft der Formprodukt-Oberfläche verändert, zumindest ein auf zumindest einem Teil der Formprodukt-aberfläche fest haftendes Faser-Flock-Material. Dies ist ein Material,

dessen Aufbringung auf die Formprodukt-Oberfläche zur Folge hat, daß sich mindestens eine, weiter bevorzugt eine oder zwei, Eigenschaft(en) verändern, die die Formprodukt-Oberfläche ohne das vorgenannte Material aufweist. In bevorzugten Ausführungsformen der Erfindung kann die veränderte Eigenschaft beispielsweise, jedoch nicht die Erfindung beschränkend, gewählt sein aus optischen Eigenschaften (z. B. (nicht beschränkend) Glanz, Transparenz, Brechungsindex), haptischen Eigenschaften (z. B. (nicht beschränkend) Glätte bzw. Rauheit, Textur, Klebrigkeit), thermischen Eigenschaften (z. B. (nicht beschränkend) Wärmeleitfähigkeit bzw. Wärmeisolation, Wärmeabstrahlung), chemischen Eigenschaften (z. B. (nicht beschränkend) Beständigkeit gegen Licht, Beständigkeit gegen Chemikalien wie beispielsweise Alkalien, Quellungseigenschaften, Wasseraufnahmevermögen, Wasserabweisungsvermögen), biologischen Eigenschaften (z. B. (nicht beschränkend) Beständigkeit gegen Befall durch Mikroorganismen wie beispielsweise Bakterien oder Pilze) oder Kombinationen zweier oder mehrerer der vorgenannten Eigenschaften. In besonders bevorzugten Ausführungsformen kann das Material eine oder mehrere der vorgenannten optischen, haptischen und/oder thermischen Eigenschaften auf der Formprodukt-Oberfläche verändern, am meisten bevorzugt die Transparenz und/oder die Textur und/oder die Wärmeabstrahlung, gegebenenfalls in Verbindung mit einer oder mehreren chemischen Eigenschaften wie beispielsweise der Chemikalienbeständigkeit.

Unter "zumindest auf einem Teil der Formprodukt-Oberfläche" wird im Rahmen der vorliegenden Erfindung verstanden, daß das Faser-Flock-Material die gesamte Oberfläche des Formprodukts bedecken und auf der gesamten Oberfläche des Formprodukts fest haften kann. Erfindungsgemäß bevorzugt ist die Ausführungsform, daß das Faser-Flock-Material nur auf einem Teil, besonders bevorzugt auf einem genau definierten Teil, der Oberfläche des Formprodukts vorhanden ist, dort jedoch fest haftet. Wie nachfolgend im einzelnen beschrieben wird, kann der Teil der Oberfläche des Formprodukts, auf dem das Faser-Flock-Material aufgebracht ist und fest haftet, allein oder zumindest weitgehend durch dekorative Zwecke bestimmt sein. In einer alternativen Ausführungsform ist es jedoch auch möglich, daß der Teil der Oberfläche des Formprodukts, auf dem das Faser-Flock-Material aufgebracht ist und fest haftet, allein oder zumindest weitgehend durch Gebrauchszwecke bestimmt ist. Selbstverständlich ist es auch möglich, Kriterien bei der Bestimmung des Teils der Oberfläche des Formprodukts, auf dem das Faser-Flock-Material aufgebracht ist und fest haftet, anzuwenden, die durch beide Gesichtspunkte (und gegebenenfalls auch weitere andere Gesichtspunkte) bestimmt sind.

Erfindungsgemäß umfaßt in einer bevorzugten Ausführungsform ein Temperatur-gehärtetes Keramik-Formteil auf zumindest einem Teil seiner Oberfläche zumindest ein fest haftendes Faser-Flock-Material. Unter "zumindest auf einem Teil seiner Oberfläche" wird im Rahmen der vorliegenden Erfindung verstanden, daß das Faser-Flock-Material die gesamte Oberfläche des Temperatur-gehärteten (und - wie nachfolgend im Detail beschrieben - gegebenenfalls auch glasierten) Keramik-Formteils bedecken und auf der gesamten Oberfläche des Keramik-Formteils fest haften kann. Erfindungsgemäß bevorzugt ist die Ausführungsform, daß das Faser-Flock-Material nur auf einem Teil, besonders bevorzugt auf einem genau definierten Teil, der Oberfläche des Temperatur-gehärteten und gegebenenfalls glasierten Keramik-Formteils vorhanden ist, dort jedoch fest haftet. Wie nachfolgend im einzelnen beschrieben wird, kann der Teil der Oberfläche des Keramik-Formteils, auf dem das Faser-Flock-Material aufgebracht ist und fest haftet, allein oder zumindest weitgehend durch dekorative Zwecke bestimmt sein. In einer alternativen Ausführungsform ist es jedoch auch möglich, daß der Teil der Oberfläche des Keramik-Formteils, auf dem das Faser-Flock-Material aufgebracht ist und fest haftet, allein oder zumindest weitgehend durch Gebrauchszwecke bestimmt ist. Selbstverständlich ist es auch möglich, Kriterien bei der Bestimmung des Teils der Oberfläche des Keramik-Formteils, auf dem das Faser-Flock-Material aufgebracht ist und fest haftet, anzuwenden, die durch beide Gesichtspunkte (und gegebenenfalls auch weitere andere Gesichtspunkte) bestimmt sind.

Die feste Haftung des zumindest einen Faser-Flock-Materials auf zumindest einem Teil der Oberfläche des Keramik-Formteils kann auf jedem Weg bewirkt werden, den der Fachmann für eine feste Haftung derartiger Materialien auf porösen, dichten oder sogar glatten Oberflächen kennt, ohne daß die Erfindung auf bestimmte Wege beschränkt ist. In der Erfindung wird die feste Haftung des Faser-Flock-Materials auf zumindest einem Teil, noch mehr bevorzugt auf einem Teil, der Oberfläche des Keramik-Formteils bewirkt durch Vermittlung einer Klebeschicht, die die mit dem Faser-Flock-Material zu beschichtende (Teil-) Oberfläche des Keramik-Formteils bedeckt. Hinsichtlich des Klebers der Klebeschicht sind dem Fachmann keine Grenzen gesetzt, und es sind alle denkbaren Kleber geeignet, die ein festes Haften eines Faser-Flock-Materials auf der tatsächlich vorliegenden (Teil-) Oberfläche des Keramik-Formteils bewirken. Im Einzelfall stehen dem Fachmann zahlreiche Kleber zur Verfügung, die sowohl mit dem Keramik-Material als auch mit dem Faser-Flock-Material, das Anwendung findet, sowie gegebenenfalls mit weiteren Erfordernissen (Chemikalienbeständigkeit, Lichtbeständigkeit, Lebensmittel-Kompatibilität, usw.) kompatibel sind.

Erfindungsgemäß umfaßt in einer weiteren bevorzugten Ausführungsform ein Glas-Formteil auf zumindest einem Teil seiner Oberfläche zumindest ein fest haftendes Faser-Flock-Material. Unter "zumindest auf einem Teil seiner Oberfläche" wird im Rahmen der vorliegenden Erfindung verstanden, daß das Faser-Flock-Material die gesamte Oberfläche des Glas-Formteils bedecken und auf der gesamten Oberfläche des Glas-Formteils fest haften kann. Erfindungsgemäß bevorzugt ist die Ausführungsform, daß das Faser-Flock-Material nur auf einem Teil, besonders bevorzugt auf einem genau definierten Teil, der Oberfläche des Glas-Formteils vorhanden ist, dort jedoch fest haftet. Wie nachfolgend im einzelnen beschrieben wird, kann der Teil der Oberfläche des Glas-Formteils, auf dem das Faser-Flock-Material aufgebracht ist und fest haftet, allein oder zumindest weitgehend durch dekorative Zwecke bestimmt sein. In einer alternativen Ausführungsform ist es jedoch auch möglich, daß der Teil der Oberfläche des Glas-Formteils, auf dem das Faser-Flock-Material aufgebracht ist und fest haftet, allein oder zumindest weitgehend durch Gebrauchszwecke bestimmt ist. Selbstverständlich ist es auch möglich, Kriterien bei der Bestimmung des Teils der Oberfläche des Glas-Formteils, auf dem das Faser-Flock-Material aufgebracht ist und fest haftet, anzuwenden, die durch beide Gesichtspunkte (und gegebenenfalls auch weitere andere Gesichtspunkte) bestimmt sind.

Die feste Haftung des zumindest einen Faser-Flock-Materials auf zumindest einem Teil der Oberfläche des Glas-Formteils kann auf jedem Weg bewirkt werden, den der Fachmann für eine feste Haftung derartiger Materialien auf porösen, dichten oder sogar glatten Oberflächen kennt, ohne daß die Erfindung auf bestimmte Wege beschränkt ist. In der Erfindung wird die feste Haftung des Faser-Flock-Materials auf zumindest einem Teil, noch mehr bevorzugt auf einem Teil, der Oberfläche des Glas-Formteils bewirkt durch Vermittlung einer Klebeschicht, die die mit dem Faser-Flock-Material zu beschichtende (Teil-) Oberfläche des Glas-Formteils bedeckt. Hinsichtlich des Klebers der Klebeschicht sind dem Fachmann keine Grenzen gesetzt, und es sind alle denkbaren Kleber geeignet, die ein festes Haften eines Faser-Flock-Materials auf der tatsächlich vorliegenden (Teil-) Oberfläche des Glas-Formteils bewirken. Im Einzelfall stehen dem Fachmann zahlreiche Kleber zur Verfügung, die sowohl mit dem Glas-Material als auch mit dem Faser-Flock-Material, das Anwendung findet, sowie gegebenenfalls mit weiteren Erfordernissen (Chemikalienbeständigkeit, Lichtbeständigkeit, Lebensmittel-Kompatibilität, usw.) kompatibel sind.

In bevorzugten Ausführungsformen der Erfindung ist der Kleber der Klebeschicht ein Zwei-Komponenten-Kleber, was den Vorteil bietet, daß das Klebevermögen aufgrund der getrennten Lagerung der unterschiedlichen Komponenten auch nach einer gewissen Lagerzeit noch unverändert gut ist. Dies führt zu einer dauerhaften und festen Haftung des Faser-Flock-Materials auf dem Formprodukt-Material, beispielsweise dem Keramik-Material, Glas-Material usw.. Besonders bevorzugt ist der Kleber ein Zweikomponenten-Kleber auf Lösemittel-Basis, und in der Praxis wird mit besonderem Vorteil eine Kleber-Härter-Kombination verwendet, die im Handel beispielsweise als Kombination des Klebers MECOFLOCK^{R} L847-08 mit dem Härter MECODUR^{R} L5515 von der Firma Kissel & Wolf GmbH (KiWo) erhältlich ist. Andere Kleber, die denselben Zweck erreichen, sind jedoch ebenfalls verwendbar.

Die für eine feste Haftung des Faser-Flock-Materials vorhandene Klebeschicht weist in einer bevorzugten Ausführungsform der Erfindung eine Dicke von einem Bruchteil der Dicke des Materials, das mindestens eine Eigenschaft der Formprodukt-Oberfläche verändert, bevorzugterweise einen Bruchteil der Flokkenlänge, beispielsweise von etwa 10 % der Flockenlänge, auf, was in der Praxis beispielsweise einer Dicke der Klebeschicht von 1 bis 100 µm, vorzugsweise von 10 bis 100 µm, entspricht, beispielsweise von 40 bis 60 µm, wobei in einzelnen Fällen auch Klebeschicht-Dicken über oder unter dem vorgenannten Bereich möglich sind. Dies kann ein Fachmann in diesem technischen Bereich ohne Schwierigkeiten anhand der charakteristischen Eigenschaften der zum Haften zu bringenden Material-Schichten, vorzugsweise der zum Haften zu bringenden Fasern, der charakteristischen Eigenschaften des Formprodukt-Materials, vorzugsweise des Keramik-Materials, Porzellan-Materials, Glas-Materials usw., und auch anderer Parameter entscheiden. Die Zeiten zwischen Auftrag des Klebers, insbesondere eines aus mehreren Komponenten bestehenden Klebers, und Einsetzen der klebenden Wirkung bzw. Aufbringen des Materials, das mindestens eine Oberflächen-Eigenschaft des Formprodukts verändert, vorzugsweise des Faser-Flock-Materials, richten sich nach den Umweltbedingungen (z. B. Temperatur, Druck, Feuchtigkeit) und liegen erfahrungsgemäß im Bereich von 20 s bis 20 min, beispielsweise bei 10 bis 15 min, beispielsweise bei Raumtemperatur (20 °C) und Normaldruck und 55 % Luftfeuchtigkeit, ohne daß dies als Beschränkung zu verstehen ist.

In der Erfindung umfaßt das Formprodukt zwischen seiner Oberfläche ein its und der Klebeschicht andererseits wenigstens eine Silicium haltige zirkoniumhaltige, titanhaltige oder Phosphat-, Haftvermittler-Schicht. Der Vorteil einer solchen Schicht ist, daß sie eine wesentlich gegenüber dem Zustand ohne Haftvermittler-Schicht verbesserte Bindungsfähigkeit zwischen dem Oberflächen-Material des Formprodukts und der Klebeschicht andererseits herstellt. Diese beruht beispielsweise - ohne technisch an diese Deutung der Wirkung gebunden zu sein - darauf, daß mittels der Behandlung des Werkstoffs des Formprodukts mit einem Haftvermittler insbesondere bei erhöhter Temperatur, quasi eine Oberflächenversiegelung des Werkstoffs erreicht wird, die eine vom Werkstoff unabhängige Oberflächen-Struktur gegenüber einer Klebeschicht erzeugt, was eine ausgezeichnete Bindungsfähigkeit zwischen Werkstoff des Formprodukts und Material, das mindestens eine Eigenschaft mindestens eines Teis der Formprodukt-Oberfläche verändert, bewirkt. Mit dieser Wirkung wird eine außergewöhnlich hohe Verbundfestigkeit auf der Formprodukt-Material-Fläche erreicht, und die Beständigkeit des so entstandenen Verbunds gegenüber nachfolgenden Einflüssen der Umwelt wird wesentlich erhöht. Die Haftvermittler-Schicht reduziert dazu die Grenzflächen-Diffusion und aktiviert die Formprodukt-Oberfläche für einen optimalen Verbund mit dem Kleber bzw. den Klebern der Klebeschicht. Insbesondere wird eine hohe Haftung und Beständigkeit gegen korrosionsartige Einwirkungen von chemisch aggressiven Medien erreicht. Es können erfindungsgemäß mehrere Haftvermittler gewählt werden; besonders bevorzugt ist jedoch die Verwendung eines Haftvermittlers.

In einer besonders bevorzugten Ausführungsform der Erfindung umfaßt das Keramik-Formteil zwischen dem Keramik-Material oder - in Fällen, in denen zumindest eine Glasur-Schicht auf dem Keramik-Material aufgebracht ist - zwischen der Glasur-Schicht, bei mehreren Glasur-Schichten vorzugsweise zwischen der am weitesten von dem Keramik-Material entfernten Glasur-Schicht, einerseits und der Klebeschicht andererseits wenigstens eine Silicium haltige zirkoniumhaltige, titanhaltige oder Phosphat- Haftvermittler-Schicht. Der Vorteil einer solchen Schicht ist, daß sie eine wesentlich gegenüber dem Zustand ohne Haftvermittler-Schicht verbesserte Bindungsfähigkeit zwischen dem Keramik-Material oder der äußersten Glasur-Schicht einerseits und der Klebeschicht andererseits herstellt. Diese beruht beispielsweise - ohne technisch an diese Deutung der Wirkung gebunden zu sein - darauf, daß mittels der Behandlung des Werkstoffs (Keramik-Material oder Glasur-Schicht) mit einem Haftvermittler insbesondere bei erhöhter Temperatur, quasi eine Oberflächenversiegelung des Werkstoffs erreicht wird, die eine vom Werkstoff unabhängige Oberflächen-Struktur gegenüber einer Klebeschicht erzeugt, was eine ausgezeichnete Bindungsfähigkeit zwischen Werkstoff (Keramik-Material oder Glasur-Schicht) und der Klebeschicht bewirkt. Mit dieser Wirkung wird eine außergewöhnlich hohe Verbundfestigkeit auf der Keramik-Material-Fläche bzw. der Glasur-Fläche erreicht, und die Beständigkeit des so entstandenen Verbunds gegenüber nachfolgenden Einflüssen der Umwelt wird wesentlich erhöht. Die Haftvermittler-Schicht reduziert dazu die Grenzflächen-Diffusion und aktiviert die Keramik- bzw. Glasur-Oberfläche für einen optimalen Verbund mit dem Kleber bzw. den Klebern der Klebeschicht. Insbesondere wird eine hohe Haftung und Beständigkeit gegen korrosionsartige Einwirkungen von chemisch aggressiven Medien erreicht. Es können erfindungsgemäß mehrere Haftvermittler gewählt werden; besonders bevorzugt ist jedoch die Verwendung eines Haftvermittlers.

In einer weiteren bevorzugten Ausführungsform der Erfindung umfaßt das Glas-Formteil zwischen dem Glas-Material oder - in Fällen, in denen zumindest eine Glasur-Schicht auf dem Glas-Material aufgebracht ist - zwischen der Glasur-Schicht, bei mehreren Glasur-Schichten vorzugsweise zwischen der am weitesten von dem Glas-Material entfernten Giasur-Schichit, einerseits und der Klebeschicht andererseits wenigstens eine Silicium haltige zirkoniumhaltige, titanhaltige oder Phosphat- Haftvermittler-Schicht. Der Vorteil einer solchen Schicht ist, daß sie eine wesentlich gegenüber dem Zustand ohne Haftvermittler-Schicht verbesserte Bindungsfähigkeit zwischen dem Glas-Material oder der äußersten Glasur-Schicht einerseits und der Klebeschicht andererseits herstellt. Diese beruht beispielsweise - ohne technisch an diese Deutung der Wirkung gebunden zu sein - darauf, daß mittels der Behandlung des Werkstoffs (Glas-Material oder Glasur-Schicht) mit einem Haftvermittler insbesondere bei erhöhter Temperatur, quasi eine Oberflächenversiegelung des Werkstoffs erreicht wird, die eine vom Werkstoff unabhängige Oberflächen-Struktur gegenüber einer Klebeschicht erzeugt, was eine ausgezeichnete Bindungsfähigkeit zwischen Werkstoff (Glas-Material oder Glasur-Schicht) und Klebeschicht bewirkt. Mit dieser Wirkung wird eine außergewöhnlich hohe Verbundfestigkeit auf der Keramik-Material-Fläche bzw. der Glasur-Fläche erreicht, und die Beständigkeit des so entstandenen Verbunds gegenüber nachfolgenden Einflüssen der Umwelt wird wesentlich erhöht. Die Haftvermittler-Schicht reduziert dazu die Grenzflächen-Diffusion und aktiviert die Glas- bzw. Glasur-Oberfläche für einen optimalen Verbund mit dem Kleber bzw. den Klebern der Klebeschicht. Insbesondere wird eine hohe Haftung und Beständigkeit gegen korrosionsartige Einwirkungen von chemisch aggressiven Medien erreicht. Es können erfindungsgemäß mehrere Haftvermittler gewählt werden; besonders bevorzugt ist jedoch die Verwendung eines Haftvermittlers.

Haftvermitter gemäß der Erfindung sind Silicium-haltige/Haftvermittler, Zirkonium-haltige Haftvermittler (z. B. Zirkonate), Titan-haltige Haftvermittler (z. B. Titanate), und oder Phosphat-Haftvermittler.

Weiter bevorzugt ist erfindungsgemäß die Verwendung eines Haftvermittlers oder mehrerer Haftvermittler, der/die gewählt ist/sind aus der Gruppe Silicium-haltiger Haftvermittler. Mit großem Vorteil ist als Haftvermittler-Schicht mindestens eine, am meisten bevorzugt genau eine Pyrosil^{R}-Schicht zugegen. Durch die Präsenz einer Pyrosil^{R}-Schicht können selbst schwierig mit einem Faser-Flock-Material zu verklebende Keramik-Materialien oder Glasur-Schichten oder Glas-Materialien, generell alle Materialien eines Formprodukts, optimal und haltbar mit einer fest haftenden Schicht eines Materials, das mindestens eine Oberflächen-Eigenschaft mindestens eines Teils der Formprodukt-Oberfläche verändert, insbesondere mit einer fest haftenden Schicht aus dem Faser-Flock-Material, versehen werden. Am meisten bevorzugt ist das unter der Bezeichnung Pyrosil^{R} FB25 von der Firma Berger-Klebetechnik, Gossau, CH, erhältliche Haftvermittler-Produkt.

In besonders bevorzugten Ausführungsformen der Erfindung hat die vorzugsweise unter erhöhter Temperatur aufgebrachte Pyrosil^{R}-Schicht eine Dicke von nur wenigen Atomlagen, noch mehr bevorzugt bis zu etwa 100 Atomlagen, und liegt damit im Nanometer-Bereich, ohne daß dies als Beschränkung zu verstehen ist. Der Fachmann kann durch einige wenige orientierende Vorversuche eine optimale Dicke der Haftvermittler-Schicht bestimmen, die im Einzelfall auch oberhalb des vorgenannten Bereichs liegen kann.

Weiter bevorzugt ist es erfindungsgemäß, wenn die Haftvermittler-Schicht mindestens eine Primer-Schicht umfaßt. Das Vorhandensein einer Primer-Schicht, die vorzugsweise zwischen der Haftvermittler-Schicht und der Klebeschicht zugegen ist, verbessert die Haftung der Klebeschicht auf dem Substrat noch weiter. Denkbar ist eine Primer-Schicht oder sind auch mehrere Primer-Schichten, wobei die Anwendung einer Primer-Schicht bevorzugt ist. Es kann für die Primer-Schicht jeder dem Fachmann für die Haftverbesserung der hier eingeschlossenen Materialien verwendbare Primer - einschließlich einer Kombination aus mehreren Primern - verwendet werden. Beispiele hierfür - ohne Beschränkung für die vorliegende Erfindung - sind Primer, die gewählt sind aus der Gruppe Silicium-haltiger Primer,. Besonders bevorzugt ist der Primer/sind die Primer gewählt aus der Gruppe Silicium-haltiger Primer, Zirkonium-haltige Primer (z. B. Zirkonate), Titan-haltige Primer (z. B. Titanate), Phosphat-Primer wobei am meisten bevorzugt ein mit der bevorzugten haftvermittelnden Pyrosil^{R}-Schicht abgestimmter Primer SurALink^{R} GP15 der Firma SURA Instruments GmbH, Jena (DE), in Form einer Primer-Schicht verwendet wird.

In besonders bevorzugten Ausführungsformen der Erfindung hat die Pyrosil^{R}-Primer-Schicht eine Dicke von nur wenigen Atomlagen, noch mehr bevorzugt bis zu etwa 100 Atomlagen, und liegt damit im Nanometer-Bereich, ohne daß dies als Beschränkung zu verstehen ist. Der Fachmann kann durch einige wenige orientierende Vorversuche eine optimale Dicke der Primer-Schicht bestimmen, die im Einzelfall auch oberhalb des vorgenannten Bereichs liegen kann.

In der oben genannten, besonders bevorzugten Ausführungsform besteht das Vorbehandlungs-System aus einer Kombination aus Pyrosil^{R} und einem daran angepaßten, Silicium-haltigen Primer. Dies ist das besondere Beispiel einer kombinierten physikalischen (Pyrosil^{R}) und einer chemischen Vorbehandlung (Primer). Besonders bevorzugt besteht der Primer aus einem Haftvermittler, welcher in einer starken Verdünnung vorliegt. Typische Konzentrationen an aktiven Komponenten können im Bereich von 1 bis 5 % liegen. Eine verbesserte Haftung kann zusätzlich auch mittels Beflammung (undotiert), mittels Sprüh- oder Blas-Corona-Behandlung (undotiert) oder mit verschiedenen Plasma-Verfahren erreicht werden. Insbesondere kann bei den Plasmaverfahren durch Zudosieren von Gasen oder Aerosolen eine Haftungsverbesserung erreicht werden. Ein weiteres mögliches (klassisches) Verfahren zur Aktivierung der Oberfläche ist ein Strahlverfahren. Gerade beim Strahlen kann durch Additive, die dem zum Strahlen verwendeten Sand zugegeben werden, eine deutliche Verbesserung der Haftung erreicht werden. Im Rahmen der chemischen Vorbehandlung können neben den bereits bekannten Silicium-haltigen Haftvermittlern in den Primer-Systemen auch weitere Komponenten zur Haftungsverbesserung eingesetzt werden. Als metallorganische bzw. anorganische Substanzen sind beispielsweise Zirkonate oder Titanate zu nennen. Infrage kommen auch Phosphat-Verbindungen und organische Substanzen wie beispielsweise Chloroprene, Resorcin-Formaldehyd und Isocyanate. Als Varianten der chemischen Vorbehandlung können auch das Ätzen mit verschiedenen Mineralsäuren (z. B. mit Fluorwasserstoffsäure) oder ein Fluorieren in der Gasphase zur Anwendung kommen.

Das auf zumindest einem Teil der Oberfläche des Formprodukts, Keramik-Formteils, Glas-Formteils, Polymer-Formteils, Holz-Formteils, Metall-Formteils und/oder Verbundmaterial-Formteils fest haftende Faser-Flock-Material ist für die Zwecke der vorliegenden Beschreibung und für die Patentansprüche definiert als aus einer Vielzahl einzelner Fasern, beispielsweise (jedoch nicht notwendigerweise) mit einer möglichst engen Längenverteilung bestehendes Bulk-Material, das zusammen mit einem Gas, vorzugsweise Luft, gefördert und durch die Förderung in die Form kleiner Flocken aus einer großen Zahl locker zusammenhängender einzelner Fasern gebracht werden kann. Auf einem geeigneten Substrat lassen sich derartige Flocken zu einem je nach Anwendungsgebiet mehr oder weniger dichten "Teppich" aus einzelnen Fasern, die in übereinanderliegenden Schichten angeordnet sind, verdichten, die so gewünschte haptische, optische oder auch andere Anwendungseigenschaften zeigen, wie sie nachfolgend beschrieben sind. Grundsätzlich lassen sich für ein Faser-Flock-Material, welches auf das erfindungsgemäße Formprodukt, Temperatur-gehärtete Keramik-Formteil, Glas-Formteil, Kunststoff-Formteil, Holz-Formteil, Metall-Formteil, Verbundmaterial-Formteil usw. aufgebracht wird, beliebige Fasern verwenden, solange sie die gewünschten Eigenschaften erbringen. Statt Fasern gleicher Länge (enger Längenverteilung) zu verwenden, ist es in einer Ausführungsform der Erfindung auch möglich, Fasern unterschiedlicher Länge zu verwenden; dies hat den Vorzug, eine besonders angenehme Haptik zu erreichen und die Fasern in größerer Dichte auf dem Substrat abzuscheiden.

Um die Eigenschaften eines solchen Faser-Flock-Materials möglichst genau bestimmen zu können, werden in einer bevorzugten Ausführungsform der Erfindung synthetische Fasern verwendet, da für diese ein konkretes Anforderungsprofil vorgegeben werden kann, das dann alle Fasern in gleicher Weise zeigen. Die synthetischen Fasern können anorganischer oder organischer Natur sein. Besonders bevorzugte anorganische synthetische Fasern sind erfindungsgemäß gewählt aus Mineralfasern, Gesteinsfasern, Kohlenstoff-Fasern und Metall-Fasern. Besonders bevorzugte organische synthetische Fasern sind regelmäßig Fasern aus organischen Polymeren wie beispielsweise aus Polyolefinen, Polycarbonsäuren, Polyestern, Polyamiden und Polycarbonaten. Es haben sich erfindungsgemäß Polyester und Polyamide als Material für die Fasern des Faser-Flock-Materials besonders bewährt, besonders bevorzugt Polyethylenterephthalat-Fasern bzw. Poly(hexamethylen-adipinamid)-Fasern (Polyamid-6,6-Fasern). Mit besonderen Vorteil werden Fasern der beiden vorgenannten Gruppen als Faser-Flock-Material verwendet, die im Handel unter der Bezeichnung "Polyester-(PET-)-Schnittflock" und "Polyamid 6.6-(PA 6.6-)-Schnittflock" von der Firma SwissFlock Inc., Emmenbrücke (CH), erhältlich sind. Diese können möglicherweise anorganische Substanzen (beispielsweise Pigmente) zur Färbung enthalten, beispielsweise Ruß (schwarze Färbung). Andere, für den technischen Bereich der Herstellung gefärbter Fasern übliche Farben können jedoch in gleicher Weise verwendet werden.

Vorteilhafterweise umfaßt das fest haftende Faser-Flock-Material Polyamid-Fasern und/oder Polyester-Fasern mit einer mittleren Länge von 0,1 bis 10 mm, vorzugsweise von 0,1 bis 5 mm, noch mehr vorzugsweise von 0,3 bis 3 mm.

Das Faser-Flock-Material kann ungefärbt sein, also aus farblosen Fasern bestehen, oder kann farbig sein. Vorzugsweise ist es farbig und hinsichtlich seiner Färbung auf den Grund abgestimmt, auf den es aufgebracht werden soll. Es können Farbharmonien oder Farbkontraste oder beides realisiert werden.

Es entspricht einer weiteren bevorzugten Ausführungsform der Erfindung, daß das auf dem Formprodukt, Keramik-Formteil, Glas-Formteil, Kunststoff-Formteil, Holz-Formteil, Metall-Formteil, Verbundmaterial-Formteil usw. fest haftende Faser-Flock-Material eine dichte, die Oberfläche des jeweiligen Formteils zumindest teilweise bedeckende Fläche bzw. einen dichten "Faser-Teppich" bildet. Durch die zumindest teilweise Bedeckung der Oberfläche des jeweiligen Formteils durch das fest haftende Faser-Flock-Material wird das ästhetische Erscheinungsbild des Formteils, beispielsweise des Keramik-Formteils, verändert, verglichen mit dem kein Faser-Flock-Material umfassenden Keramik-Formteil. So können durch das Faser-Flock-Material farbige, beispielsweise sich von der Oberflächenfarbe des Keramik-Formteils farblich abhebende, insbesondere farblich konstrastierende oder farblich harmonierende, dekorative Oberflächeneffekte erzielt werden. Alternativ oder gleichzeitig kann ein Effekt darin liegen, daß eine glatte glasierte Oberfläche des jeweiligen Formprodukts oder Formteils, beispielsweise des Keramik-Formteils, mit der matten Oberfläche des fest haftenden Faser-Flock-Materials ästhetisch kontrastiert und auch so ein dekorativer Effekt erzielt wird. Ein weiterer Effekt kann darin liegen, daß sich die mit dem fest haftenden Faser-Flock-Material beschichtete Teil-Oberfläche des Formprodukts, beispielsweise des Keramik-Formteils oder Glas-Formteils, über die Rest-Oberfläche des Formprodukts, beispielsweise des Keramik-Formteils oder Glas-Formteils, mehr oder weniger deutlich erhebt. Bei alledem kann entweder die gesamte Oberfläche des Formprodukts, beispielsweise des Keramik-Formteils oder Glas-Formteils, gemäß der Erfindung mit einem einzigen oder mehreren verschiedenen Faser-Flock-Material(ien) bedeckt sein, oder es kann nur eine Teil-Oberfläche des Formprodukts, beispielsweise des Keramik-Formteils oder Glas-Formteils, mit einem einzigen oder mehreren verschiedenen Faser-Flock-Material(ien) bedeckt sein. Unterschiede verschiedener Faser-Flock-Materialien können in der unterschiedlichen Form der einen Teil der Oberfläche des Formprodukts, beispielsweise des Keramik-Formteils oder des Glas-Formteils, bedeckenden Fläche, in der unterschiedlichen Farbe, in der unterschiedlichen Höhe gegenüber der Rest-Fläche des Formprodukts, beispielsweise des Keramik-Formteils oder Glas-Formteils, in der unterschiedlichen Länge der Fasern des Faser-Flock-Materials, in der unterschiedlichen Flockendichte oder auch in Unterschieden anderer Parametern liegen.

Eine weitere vorteilhafte Ausführungsform der Erfindung besteht darin, daß beim Berühren oder Anfassen die mit dem Faser-Flock-Material erfindungsgemäß beschichtete Oberfläche oder Teil-Oberfläche des Formprodukts, beispielsweise des Keramik-Formteils, Glas-Formteils usw., einen anderen Eindruck vermittelt als das Material des Formprodukts, beispielsweise das Keramik-Material des Formteils oder das Glas-Material des Formteils und/ oder eine oder mehrere auf dem Formprodukt, beispielsweise auf dem Keramik-Material oder Glas-Material usw., aufgebrachte Glasur(en). Während sich die letztgenannten Materialien kühl und rauh bzw. kühl und glatt anfühlen, vermittelt der "Teppich" aus Faser-Flock-Material(ien) ein satin-weiches oder samtweiches Berühr-Gefühl, das darüber hinaus stets angenehm hinsichtlich der Temperatur ist (und meist bei der Temperatur der Umgebungsluft liegt).

Weitere Vorteile der auf zumindest einem Teil ihrer Oberfläche zumindest ein fest haftendes Faser-Flock-Material umfassenden Formprodukte, beispielsweise der Keramik-Formteile, Glas-Formteile usw., gemäß der Erfindung sind, daß die mit zumindest einem fest haftenden Faser-Flock-Material beaufschlagten oder beschichteten (Teil-) Flächen des Formprodukts, beispielsweise des Keramik-Formteils, Glas-Formteils, Polymer-Formteils usw., selbst dann relativ kühl bleiben, wenn die nicht mit dem Faser-Flock-Material beschichtete (Teil-) Oberfläche heiß ist. Dies kann beispielsweise eine Rolle spielen, wenn das Formprodukt, beispielsweise das Keramik-Formteil, Glas-Formteil, Metall-Formteil usw., ein Gefäß ist, das mit einer heißen Substanz wie beispielsweise einer heißen Flüssigkeit oder einem heißen Feststoff gefüllt ist, die/der die Gefäß-Wände erhitzt, oder wenn das Formprodukt, beispielsweise das Keramik-Formteil, Glas-Formteil, Metall-Formteil usw., durch externe Energiequellen (z. B. Mikrowellen-Energie oder Infrarot-Energie) erhitzt wird. Durch das geringe Wärmeaufnahmevermögen bzw. das hohe Wärmedämmvermögen des Faser-Flock-Materials wird letzteres nicht erhitzt und kann selbst dann ohne Schutzvorrichtungen berührt und angefaßt werden, wenn das Material des Formprodukts, beispielsweise das Keramik-Material oder Glas-Material des Formteils wegen der hohen Temperatur nicht berührt werden kann.

Überraschend wurde weiter gefunden, daß erfindungsgemäße Formprodukte, beispielsweise die erfindungsgemäßen Keramik-Formteile, Glas-Formteile, Polymer-Formteile, Holz-Formteile, Metall-Formteile oder Verbundmaterial-Formteile, die auf zumindest einem Teil ihrer Oberfläche zumindest ein fest haftendes Material umfassen, das wenigstens eine Eigenschaft wenigstens eines Teils der Formprodukt-Oberfläche verändert, und zwar in Form eines test haftenden Faser-Flock-Materials umfassen, auch lebensmittel-geeignet sind, also im Zusammenhang mit der Zubereitung, der Aufbewahrung und dem Verzehr von Lebensmitteln verwendet werden können, ohne daß nachteilige Folgen für die Lebensmittel oder den Verbraucher zu erwarten sind.

Weiter war es ein überraschendes Ergebnis der zur vorliegenden Erfindung führenden Forschung, daß die erfindungsgemäßen Formprodukte, beispielsweise die erfindungsgemäßen Keramik-Formteile, Glas-Formteile usw., die zumindest auf einem Teil ihrer Oberfläche zumindest ein fest haftendes Material umfassen, das wenigstens eine Eigenschaft wenigstens eines Teils der Formprodukt-Oberfläche verändert, und zwar in Form eines fest haftenden Faser-Flock-Materials umfassen, auch für ein Spülen in einer handelsüblichen Spülmaschine geeignet sind, d. h. sich selbst nach zahlreichen Spülgängen in einer handelsüblichen Geschirrspülmaschine für Haushalts- oder Gewerbezwecke und unter Verwendung eines üblichen (meist stark alkalischen) Geschirrspülmittels das Material, das wenigstens eine Eigenschaft wenigstens eines Teils der Formprodukt-Oberfläche verändert, nämlich das fest haftende Faser-Flock-Material, von der Formprodukt-Oberfläche, beispielsweise von der Keramik-Oberfläche oder von der glasierten Keramik-Oberfläche des Keramik-Formteils oder von der Glas-Oberfläche oder von der glasierten Glas-Oberfläche des Glas-Formteils usw., weder ganz noch teilweise ablöst. Mindestens 1000 Spülgänge in einer handelsüblichen Haushalts- oder Gewerbe-Geschirrspülmaschine mit im Handel erhältlichen, stark alkalischen Reinigern bei Temperaturen bis zu 65 °C konnten ohne Ablöse-Erscheinungen des Materials, insbesondere des Faser-Flock-Materials, absolviert werden. Konkret betrifft daher die vorliegende Erfindung in einer ihrer bevorzugten Ausführungsformen Formprodukt mit zumindest einem Material, das wenigstens eine Eigenschaft zumindest eines Teils der Formprodukt-Oberfläche verändert, auf zumindest einem Teil der Formprodukt-Oberfläche, bevorzugterweise ein Temperatur-gehärtetes Keramik-Formteil oder Glas-Formteil mit zumindest einem Faser-Flock-Material auf zumindest einem Teil seiner Oberfläche mit einer Beständigkeit gegen alkalisch-wäßrige Spüllösung von mindestens 1000 üblichen Geschirrspülmaschinen-Spül- und Trockengängen bei bis zu 65 °C.

Besonders bevorzugt sind erfindungsgemäß Keramik-Formteile mit den oben beschriebenen vorteilhaften Merkmalen in Form von mit zumindest einem Faser-Flock-Material auf zumindest einem Teil seiner Oberfläche versehenen Irdengut, Steingut, Steinzeug oder Porzellan, wobei Porzellan erfindungsgemäß ganz besonders bevorzugt ist.

In einer weiteren Ausführungsform der Erfindung sind besonders bevorzugt Glas-Formteile mit den oben beschriebenen vorteilhaften Merkmalen in Form von mit zumindest einem Faser-Flock-Material auf zumindest einem Teil seiner Oberfläche versehenen Glas-Material, beispielsweise (nicht beschränkend) Trinkgläser mit Stielen oder Flächen, die zumindest teilweise mit dem vorstehend beschriebenen Faser-Flock-Material beschichtet sind.

Wenn erfindungsgemäß die gesamte Oberfläche eines Keramik-Formteils mit zumindest einem Faser-Flock-Material, mit Vorteil mit einem Faser-Flock-Material beschichtet wird, wird vorzugsweise das Keramik-Formteil vorher glasiert (auch wenn es grundsätzlich möglich ist, unglasierte Keramik-Formteile mit einem Faser-Flock-Material gemäß der Erfindung zu versehen). In Fällen, in denen nur ein Teil der Oberfläche des Keramik-Formteils mit einem Faser-Flock-Material beaufschlagt wird, wird vorzugsweise eine Glasur vorgesehen. Dies kann - um ein besonders bevorzugtes Beispiel zu nennen - beispielsweise bei Formteilen aus Porzellan der Fall sein, die dem Gebrauch im Haushalt zum Essen, Trinken, Zubereiten oder Aufbereiten von Speisen und/oder Getränken oder ähnlichen Fällen dienen. Bei solchen Gegenständen können beispielsweise Henkel (z. B. bei Tassen), Flächenbereiche (bei Bechern, Tellern), Stiele (bei Kasserolen oder Töpfen) mit dem Faser-Flock-Material beaufschlagt werden. Es werden so nicht nur optische (beispielsweise dekorative) oder haptische (d. h. das angenehme Berühren betreffende) Wirkungen erzielt, sondern beispielsweise auch ermöglicht, daß solche Gegenstände - wenn mit heißen Inhalten gefüllt oder durch externe Wärmequellen erhitzt - an den Stellen, an denen sich das Faser-Flock-Material befindet, angefaßt werden können, da das Faser-Flock-Material durch sein schlechtes Wärmeaufnahmevermögen und seine schlechte Wärmeleitfähigkeit nicht heiß wird, sondern im wesentlichen bei der Temperatur der umgebenden Luft bleibt, also solchen Temperaturen, die vom Menschen nicht als schmerzhaft auf der Haut empfunden werden. In gleicher Weise kann auch bei Formteilen aus - beispielhaft und die Erfindung nicht beschränkend - Glas vorgesehen werden, entweder einen Teil des Glas-Formteils oder das gesamte Glas-Formteil mit einem Faser-Flock-Material zu beschichten. Beispiele hierfür können Trinkgläser (beispielsweise Weingläser), deren Stiel mit einem Faser-Flock-Material beschichtet ist, oder Glas-Gefäße für die Aufbewahrung von Lebensmitteln (beispielsweise Konfitüre oder Honig) sein, deren Deckel und oder Gefäß-Teilflächen mit einem Faser-Flock-Material beschichtet ist/sind. Die vorgenannten Beispiele dienen nur der Erläuterung der Erfindung und nicht deren Beschränkung auf bestimmte Ausführungsformen.

Das erfindungsgemäße Verfahren zur Herstellung eines auf zumindest einem Teil seiner Oberfläche ein fest haftendes, wenigstens eine Eigenschaft wenigstens eines Teils der Formprodukt-Oberfläche veränderndes Material umfassenden Formprodukts kann beispielsweise ablaufen unter Herstellen eines Formprodukt-Rohlings mit definierter Struktur, gegebenenfalls Versehen des Formprodukt-Rohlings auf zumindest einem Teil seiner Oberfläche mit einem die Gebrauchsfertigkeit verbessernden Überzug und Versehen zumindest eines Teils der Oberfläche des gegebenenfalls mit einem Überzug versehenen Formprodukt-Rohlings mit einem fest haftenden Material, das mindestens eine Eigenschaft wenigstens eines Teils der Formprodukt-Oberfläche verändert.

Die Herstellung eines Formprodukt-Rohlings kann nach dem Fachmann an sich bekannten Verfahrensweisen erfolgen, ohne einer Beschränkung zu unterliegen. Je nach Material kann der Herstellungs-Prozeß beispielsweise ein Formen durch Extrudieren, Gießen, Pressen, Formen in einer Spritzform, Gußform, Pulverform (kaltisostatisches oder heißisostatisches Pressen), Blasen (gegebenenfalls auch in eine Form) usw. sein. Der Fachmann kann den jeweiligen Formgebungs-Prozeß anhand des Materials und der für das Material optimal geeigneten Bedingungen aufgrund seiner Fachkenntnisse auswählen. Das Formverfahren kann je nach Material und Kompliziertheit des angestrebten Formprodukt-Rohlings manuell oder automatisiert oder halb-automatisiert und gegebenenfalls auch elektronisch gesteuert durchgeführt werden.

In einem nachfolgenden Verfahrensschritt kann der im ersten Schritt hergestellte Formprodukt-Rohling mit einem Überzug versehen werden. Dieser Verfahrensschritt ist ein möglicher, nicht jedoch zwingender Schritt; es sind erfindungsgemäß Formprodukt-Rohlinge denkbar, deren weitere Behandlung ohne den Schritt des Versehens mit einem Überzug erfolgen kann. Ein solcher Überzug kann allein dekorativen Zwecken dienen. Es ist jedoch erfindungsgemäß bevorzugt, daß der Formprodukt-Rohling mit einem Überzug versehen wird, der seine Gebrauchsfertigkeit verbessert. In diesem Schritt kann ein Überzug oder können mehrere Überzüge auf das Formprodukt aufgebracht werden; im Falle mehrerer Überzüge können diese veschiedenen Zwecken oder dem gleichen Zweck dienen. Vorzugsweise wird ein Überzug auf das Formprodukt aufgebracht. In einer bevorzugten Ausführungsform des Verfahrens dient der Überzug dem Schutz des Formprodukts vor physikalischen oder chemischen Beeinträchtigungen, beispielsweise (nicht beschränkend) der Beständigkeit gegen Feuchtigkeit, ätzende (alkalische) oder saure Chemikalien, mikrobiellen Befall und/oder der Verbesserung der Resistenz des Formprodukts gegen Schlag oder Stoß. Selbstverständlich kann mit einer oder mehreren der vorgenannten Zweckbestimmungen auch ein ästhetischer Aspekt einhergehen, der der Aufbringung eines Überzugs auf das Formprodukt zugrundeliegt.

In einem weiteren Verfahrensschritt wird auf das Formprodukt erfindungsgemäß ein Material aufgebracht, das auf der Formprodukt-Oberfläche fest haftet und mindestens eine Eigenschaft mindestens eines Teils der Formprodukt-Oberfläche verändert. Durch diesen Verfahrensschritt kann eine oder können mehrere Eigenschaften der Formprodukt-Oberfläche verändert werden; bevorzugt ist die Änderung einer Eigenschaft oder zweier Eigenschaften. Denkbar ist, diese Eigenschaft(en) auf einem Teil der Oberfläche des Formprodukts zu verändern oder auf der gesamten Oberfläche des Formprodukts zu ändern; erfindungsgemäß ist es bevorzugt, mindestens eine Eigenschaft der Oberfläche auf einem Teil der Formprodukt-Oberfläche zu verändern.

Hinsichtlich der festen Haftung des im vorliegenden Schritt aufgebrachten Materials auf die Formprodukt-Oberfläche, insbesondere durch Kleben, und hinsichtlich der Definition des Materials, das mindestens eine Eigenschaft der Formprodukt-Oberfläche verändert, wird auf die obigen ausführlichen Angaben verwiesen.

In einer bevorzugten Ausführungsform erfolgt das erfindungsgemäße Verfahren zur Herstellung eines Temperatur-gehärteten, auf zumindest einem Teil seiner Oberfläche zumindest ein fest haftendes Faser-Flock-Material umfassenden Keramik-Formteils durch Herstellen eines Formteil-Rohlings aus einem Keramik-Ausgangsmaterial, Trocknen und/oder Sintern des Formteil-Rohlings und gegebenenfalls Versehen des so erhaltenen getrockneten und/oder gesinterten Formteil-Rohlings auf zumindest einem Teil seiner Oberfläche mit mindestens einer Glasur und Härten der mindestens einen Glasur bei erhöhter Temperatur. Dabei oder danach bringt man auf mindestens einem Teil der Oberfläche des getrockneten und/oder gesinterten Formteil-Rohlings oder auf mindestens einem Teil der Oberfläche des mit einer Glasur versehenen, Temperatur-gehärteten Formteil-Rohlings zumindest ein Faser-Flock-Material zum Haften.

Im Rahmen dieses Verfahren erfolgen die ersten Herstellungsschritte nach dem Fachmann an sich bekannten Verfahrensweisen, und für die Auswahl dieser Verfahrensweisen ist dem Fachmann keine Beschränkung auferlegt. So kann in einer denkbaren Ausführungsform der Erfindung das Herstellen eines Formteil-Rohlings beispielsweise derart erfolgen, daß ein Keramik-Ausgangsmaterial durchmischt und (wie beim herkömmlichen Töpfern) modelliert wird. Genauso ist es möglich, daß ein maschinell durchmischtes, beispielsweise in Strangform vorliegendes Keramik-Ausgangsmaterial in eine vorgefertigte Form gepreßt wird. Weiter kann eine Suspension der durchmischten Ausgangsmaterialien durch Schlickergießen in eine Form gefüllt und überschüssiges Suspensionsmittel abgelassen werden. Die Herstellung eines Formteil-Rohlings ist in gleicher Weise auch durch Pulver als Ausgangsmaterial einsetzende Verfahren möglich, beispielsweise durch Trocken- oder Feuchtpressen eines pulverförmigen Keramik-Ausgangsmaterials. Die Erfindung ist jedoch nicht auf die vorstehend nur beispielhaft genannten Vorgehensweisen beschränkt, sondern es können alle dem Fachmann für die Formgebung bekannten Verfahren auch im Rahmen der vorliegenden Erfindung angewendet werden. Auch dazu kann wieder Bezug auf die Literaturstelle in "Römpp Chemielexikon", a. a. O., genommen werden.

Ein so auf an sich bekanntem Wege hergestellter Formteil-Rohling wird anschließend auf an sich bekanntem Weg getrocknet. Der hierfür erforderliche mindestens eine Trocknungsvorgang findet in aller Regel bei erhöhter Temperatur und geregelter, meist geringer Luftfeuchtigkeit der Umgebung statt. Für die Trocknung kommen alle an sich bekannten bzw. denkbaren Verfahren in Frage, beispielsweise (ohne Beschränkung hierauf) die sog. "Darren-" oder Freiluft-Trocknung, Schaukel-Trocknung, Kammer-Trocknung oder Tunneltrocknung. Denkbar ist auch eine Mikrowellen-Trocknung, im Verlauf derer der Formteil-Rohling durch einen industriellen Mikrowellen-Ofen geführt wird. Die Trocknungs-Vorgänge laufen bekanntermaßen bei erhöhten Temperaturen (beispielsweise unter Nutzung der Abwärme paralleler Brennvorgänge anderer Keramik-Materialien), beispielsweise bei Temperaturen im Bereich von 50 bis 200 °C, und bei geregelter, beispielsweise geregelt reduzierter Luftfeuchtigkeit ab.

Anstelle der Trocknung oder im Anschluß an diese kann der (gegebenenfalls getrocknete) Formteil-Rohling einem Vorgang des Brennens, auch Sintern genannt, unterworfen werden. Die Temperaturen des Sinter-Schrittes liegen bekanntlich bei > 800 °C und hängen - wie auch der Temperaturverlauf des Sinter-Schrittes - stark von der Zusammensetzung des Keramik-Materials, der gewünschten Porosität bzw. Dichte des Keramik-Formteils und dem beabsichtigten Gebrauch des Fertigprodukts ab.

Ein optionaler, d. h. nicht zwingender, jedoch häufig durchgeführter, ebenfalls an sich bekannter Verfahrensschritt nach dem Sintern ist, das bereits getrocknete und gesinterte Keramik-Formteil mit einer schützenden und/oder dekorativen Glasur zu versehen und diese auf ebenfalls an sich bekanntem Weg zu brennen bzw. zu sintern. Auch dieser Vorgang findet bekanntermaßen bei erhöhter Temperatur statt, regelmäßig bei > 1000 °C, was wiederum von dem zur Glasur verwendeten Material, der gewünschten Dichte der Glasur und dem beabsichtigten Gebrauch des Fertigprodukts abhängt. Das Aufbringen einer Glasur ist - wie beschrieben - ein optionaler Schritt und ist als solcher keine zwingende, jedoch eine häufige Voraussetzung für die Aufbringung zumindest eines Faser-Flock-Materials auf zumindest einen Teil der Oberfläche des Keramik-Formteils.

In einem weiteren, erfindungsgemäß ebenfalls bevorzugten Verfahren wird aus einem Glas-Rohmaterial, das üblicherweise durch Erhitzen geschmolzen wird, ein Formteil-Rohling aus Glas hergestellt. Dies kann durch dem Fachmann auf dem Gebiet der Glasherstellung bekannte, übliche Verfahren erfolgen, beispielsweise durch Gießen in eine Form, Blasen im (halb) geschmolzenen Zustand oder andere Glas-Form-Verfahren. Der so erhaltene Formteil-Rohling wird in bekannter Weise unter die Glastemperatur abgekühlt, üblicherweise zur Vermeidung von Spannungen im erhaltenen Glas-Formkörper getempert, d. h. unter geregelten Temperatur-Bedingungen auf Raumtemperatur (beispielsweise 20 °C) abgekühlt und gegebenenfalls mit einem Überzug versehen, der praktischen oder dekorativen (oder beiden) Zwecken dienen kann. Danach erfolgt auf die oben beschriebene Weise die Aufbringung eines mindestens eine Eigenschaft der Glas-Oberfläche auf mindestens einem Teil der Glas-Oberfläche verändernden Material, das erfindungsgemäß ein Faser-Flock-Material gemäß der obigen Erfindung ist.

Die Herstellung von Formteil-Rohlingen aus anderen, erfindungsgemäß ebenfalls geeigneten Materialien (Polymere, Holz, Matell, Verbund-Werkstoffe) erfolgt auf für den Fachmann auf dem jeweiligen Gebiet bekannten Wegen der Formgebung und bedarf daher an dieser Stelle keiner weiteren Erläuterung.

Erfindungsgemäß bevorzugt bringt man auf mindestens einem Teil der Oberfläche des getrockneten und/oder gesinterten Keramik-Formteil-Rohlings oder auf mindestens einem Teil der Oberfläche des mit einer Glasur versehenen, Temperatur-gehärteten Keramik-Formteil-Rohlings oder auf mindestens einem Teil eines Glas-Formteil-Rohlings zumindest ein Faser-Flock-Material zum Haften. Der Weg, auf dem man das zumindest eine Faser-Flock-Material auf zumindest einem Teil der Oberfläche des (gegebenenfalls mit einer Glasur versehenen) Formteil-Rohlings zum Haften bringt, kann jeder beliebige Weg sein, vorausgesetzt, daß er zu einer festen Haftung des Faser-Flock-Materials führt. Der Fachmann in diesem technischen Gebiet kennt eine ganze Reihe von Wegen, um dies zu bewirken, und er kann mit einigen wenigen orientierenden Vorversuchen den optimalen Weg finden, der auf das jeweils verwendete Faser-Flock-Material und das Keramik-Material bzw. die Glasur abgestimmt und insoweit optimiert ist.

Grundsätzlich sind für ein Faser-Flock-Material, welches erfindungsgemäß auf den Temperatur-gehärteten Keramik-Formteil-Rohling oder die darauf aufgebrachte und gebrannte Glasur oder auf den Glas-Formteil-Rohling oder auf die darauf aufgebrachte Glasur aufgebracht wird, beliebige Fasern verwendbar, solange sie die gewünschten Eigenschaften erbringen.

Um die Eigenschaften eines solchen Faser-Flock-Materials möglichst genau bestimmen zu können, werden in einer bevorzugten Ausführungsform der Erfindung synthetische Fasern verwendet, da für diese ein konkretes Anforderungsprofil vorgegeben werden kann, das dann alle Fasern in gleicher Weise zeigen. Die synthetischen Fasern können anorganischer oder organischer Natur sein. Besonders bevorzugte anorganische synthetische Fasern sind erfindungsgemäß gewählt aus Mineralfasern, Gesteinsfasern, Kohlenstoff-Fasern und Metall-Fasern. Besonders bevorzugte organische synthetische Fasern sind regelmäßig Fasern aus organischen Polymeren wie beispielsweise aus Polyolefinen, Polycarbonsäuren, Polyestern, Polyamiden und Polycarbonaten. Erfindungsgemäß haben sich Fasern aus Polyestern und Polyamiden besonders bewährt, besonders bevorzugt Polyethylenterephthalat-Fasern bzw. Poly(hexamethylenadipinamid)-Fasern (Polyamid-6,6-Fasern). Mit besonderen Vorteil werden Fasern der beiden vorgenannten Gruppen als Faser-Flock-Material verwendet, die im Handel unter der Bezeichnung "Polyester-(PET-)Schnittflock" und "Polyamid 6.6-(PA 6.6-)Schnittflock" von der Firma SwissFlock Inc., Emmenbrücke (CH) erhältlich sind.

Vorteilhafterweise werden für das fest haftende Faser-Flock-Material Polyamid-Fasern mit einer mittleren Länge im Bereich von 0,1 bis 10 mm, vorzugsweise von 0,1 bis 5 mm, besonders bevorzugt von 0,3 bis 3 mm, verwendet.

Starken Einfluß auf die feste Haftung des Faser-Flock-Materials auf der hierfür vorgesehenen (Teil-) Oberfläche des Formprodukts, beispielsweise des Keramik-Formteils, Glas-Formteils usw., hat die optimale Vorbereitung der HaftFläche, damit hohe Haft-Kräfte aufgebaut werden können. Die Fläche muß trocken, frei von Staub, Öl, Trennmitteln und anderen Verunreinigungen sein. In einer besonders bevorzugten Ausführungsform des erfindungsgemäßen Verfahrens wird daher die Formprodukt-Oberfläche, beispielsweise die keramische Oberfläche des Formteil-Rohlings oder die mit einer Glasur versehene und gebrannte Oberfläche eines Formteil-Rohlings oder die Glas-Oberfläche des Formteil-Rohlings vor dem Aufbringen des Faser-Flock-Materials gereinigt. Eine derartige Reinigung kann auf jedem dem Fachmann auf diesem Gebiet bekannten Weg erfolgen, solange sie den gewünschten Reinigungseffekt erbringt. In einer noch weiter bevorzugten Ausführungsform erfolgt die Reinigung in wäßriger Phase, beispielsweise (vorteilhaft, jedoch nicht beschränkend) in alkalischwäßriger Phase. Es hat sich beispielsweise bewährt, den (gegebenenfalls mit einer Glasur versehenen) Formteil-Rohling in einer handelsüblichen Haushalts- oder Gewerbe-Spülmaschine einem normalen Spülgang mit einem alkalischen Reinigungsmittel zu unterziehen und anschließend sorgfältig in staub-freier Umgebung zu trocknen. Dies ergab eine optimal für die nachfolgenden Verfahrensschritte vorbereitete Oberfläche des Formteil-Rohlings.

Gemäß der Erfindung bringt man auf zumindest einen Teil der Oberfläche des Formprodukts, beispielsweise der keramischen Oberfläche oder Glas-Oberfläche des Formteil-Rohlings oder auf zumindest einen Teil der glasierten Oberfläche des Formteil-Rohlings vor dem Aufbringen des Faser-Flock-Materials mindestens eine Haftvermittler-Schicht auf. In einer weiter bevorzugten Ausführungsform erfolgt dieser Schritt der Aufbringung einer Haftvermittler-Schicht nach dem Reinigen, wie es vorangehend beschrieben wurde, und vor dem Aufbringen des Faser-Flock-Materials. Es kann eine Haftvermittler-Schicht aufgebracht werden, oder es können mehrere Haftvermittler-Schichten aufgebracht werden. Im letztgenannten Fall können die mehreren Haftvermittler-Schichten den gleichen Haftvermittler oder voneinander verschiedene Haftvermittler umfassen. Bevorzugt ist die Aufbringung einer Haftvermittler-Schicht. Besonders bevorzugt ist die mindestens eine Haftvermittler-Schicht ausgewählt aus der Gruppe Silicium-haltiger Haftvermittler. Mit großem Vorteil wird als Haftvermittler-Schicht mindestens eine, am meisten bevorzugt genau eine Pyrosil^{R}-Schicht verwendet. Am meisten bevorzugt ist das unter der Bezeichnung Pyrosil^{R} FB25 von der Firma Berger-Klebetechnik, Gossau, CH, erhältliche Haftvermittler-Produkt.

Das von der Firma Berger-Klebe-Technik, Gossau, Schweiz, vorgestellte Pyrosil^{R}-Verfahren, das an sich bekannt ist und erfindungsgemäß besonders bevorzugt angewendet wird, um den Haftvermittler auf die mit dem Faser-Flock-Material zu beaufschlagende (Teil-) Fläche des Formprodukts, beispielsweise des Keramik-Formteils, Glas-Formteils usw., aufzubringen, besteht darin, beispielsweise mittels eines heißen Gasstroms das Pyrosil^{R} zu aktivieren und in Form einer sehr dünnen, für das Auge nicht wahrnehmbaren Schicht auf die später mit dem Faser-Flock-Material zu beschichtende Oberfläche des Formprodukts, beispielsweise des Keramik-Formteils, Glas-Formteils usw., aufzubringen. Mittels des Pyrosil^{R}-Materials wird eine ausgezeichnete Bindungsfähigkeit zwischen Substrat und einem aufzubringenden Kleber erreicht, und die Beständigkeit des Schichtenverbundes gegenüber Umwelteinflüssen wird wesentlich erhöht. Besonders bevorzugt erfolgt die Aufbringung der mindestens einen Haftvermittler-Schicht mittels Beflammen, also unter thermischer Aktivierung der Fläche und des Haftvermittlers.

Erfindungsgemäß bevorzugt ist es, zusätzlich zu der Haftvermittler-Schicht, d. h. nach deren Aufbringung, auch zumindest eine Primer-Schicht auf zumindest eine Teil der Haftvermittler-Schicht(en) aufzubringen. Es kann ein Primer-Schicht aufgebracht werden, oder es können mehrere Primer-Schichten aufgebracht werden. Im letztgenannten Fall können die Primer verschiedener Primer-Schichten gleich oder voneinander verschieden sein. Vorzugsweise wird eine Primer-Schicht aufgebracht. Der Primer dient der weiteren Verbesserung der Haftung des Faser-Flock-Materials und dem verbesserten Schutz des Verbundes gegen korrodierende Einflüsse, beispielsweise von alkalischen Spüllaugen.

In besonders bevorzugten Ausführungsformen ist der Primer bzw. sind die Primer erfindungsgemäß gewählt aus der Gruppe Silicium-haltiger Primer, wobei am meisten bevorzugt ein mit der bevorzugten haftvermittelnden Pyrosil^{R}-Schicht abgestimmter Primer SurALink^{R} GP15 der Firma SURA Instruments GmbH, Jena (DE), in Form einer Primer-Schicht verwendet wird.

Erfindungsgemäß geht man weiter so vor, daß man vor dem Aufbringen des Faser-Flock-Materials zumindest eine Klebeschicht auf den Teil oder die Teile der Oberfläche des Keramik-Formteils aufbringt, an denen das Faser-Flock-Material fest haften soll. Die Aufbringung der zumindest einen Klebeschicht erfolgt nach dem Aufbringen der mindestens einen Haftvermittler-Schicht und vor dem Aufbringen des Faser-Flock-Materials und bevorzugt nach dem Aufbringen der mindestens einen Primer-Schicht und vor dem Aufbringen des Faser-Flock-Materials.

In bevorzugten Ausführungsformen des Verfahrens wird als Kleber der Klebeschicht ein Zwei-Komponenten-Kleber verwendet. Dies führt zu einer dauerhaften und festen Haftung des Faser-Flock-Materials auf dem Keramik-Material. Besonders bevorzugt wird als Kleber ein Zweikomponenten-Kleber auf Lösemittel-Basis verwendet, und in der Praxis wird mit besonderem Vorteil eine Kleber-Härter-Kombination verwendet, die im Handel beispielsweise als Kombination des Klebers MECOFLOCK^{R} L847-08 mit dem Härter MECODUR^{R} L5515 von der Firma Kissel & Wolf GmbH (KiWo) erhältlich ist.

In einer besonders bevorzugten Ausführungsform des erfindungsgemäßen Verfahrens erfolgt der Auftrag des Faser-Flock-Materials auf die mit Kleber (und gegebenenfalls Haftvermittler und gegebenenfalls Primer) versehene Oberfläche des Formprodukts, insbesondere des Keramik-Formteils oder Glas-Formteils, unmittelbar nach dem Kleberauftrag. Diese schnelle Folge der Verfahrensschritte "Kleberauftrag" und "Auftrag des Faser-Flock-Materials" dient einer Optimierung des Prozeßablaufs, und zwar nicht nur im Sinne einer Verkürzung der Gesamt-Verfahrensdauer, sondern auch einer Verbesserung des Klebe-Ergebnisses. In diesem Zusammenhang wird auf die obigen Ausführungen bezüglich der Tatsache verwiesen, daß sowohl chemische als auch physikalische Verfahren zur Oberflächen-Vorbehandlung als auch Kombinationen aus physikalischen und chemischen Verfahren zur Oberflächen-Vorbehandlung verwendet werden können. Diese umfassen beispielsweise, daß ein zur Anwendung kommender Primer einen Kleber integriert hat.

Eine weitere, ebenfalls bevorzugte Ausführungsform des Verfahrens betrifft die Beflockung von Formprodukten unter Anlegen eines elektrischen Feldes. Diese Ausführungsform ist besonders bevorzugt, wenn der zu beflockende Formkörper eine komplizierte dreidimensionale Struktur aufweist. Im Rahmen dieser Verfahrensvariante wird an das zu beschichtenden Formprodukt, beispielsweise den Keramik-Formkörper oder den Glas-Formkörper, ein elektrisches Feld angelegt, und das Beschichtungsmaterial, beispielsweise das Faser-Flock-Material wird entgegengesetzt elektrisch geladen. Durch die gegenseitige Anziehung der beiden Ladungen können selbst geometrisch komplizierte Formprodukte ohne Probleme mit einer Schicht eines Materials, beispielsweise mit einem Faser-Flock-Material, versehen werden. Dies geschieht rein praktisch beispielsweise dadurch, daß in die Formteile, die - z. B. im Falle der Keramik- oder Glas-Formteile - natürlicherweise schlechte metallische Leiter sind, hochgradig leitfähige Materialien eingebacht werden. In einer weiteren Variante können Kleber und/oder Primer (beispielsweise durch Zugabe von Metallpartikeln) mit einer definierten Leitfähigkeit versehen werden. Zu behandelnde Formteile werden erfindungsgemäß dann auf einen Eisenkern gestellt. Für eine ausreichende Erdung ist dabei zu sorgen.

Weiter bevorzugt ist es erfindungsgemäß wegen der guten, mit dieser Verfahrensvariante erzielten Ergebnisse, bei dem Schritt des Beflockens eine bestimmte Luftfeuchtigkeit einzustellen. Diese kann vom Fachmann leicht experimentell werden, legt jedoch idealerweise (und damit weiter bevorzugt bei 60 % bei Raumtemperatur (20 °C). Bei diesen Bedingungen läßt sich eine Beflockung des Formprodukts, beispielsweise des Keramik-, Porzellan-, Glas- (usw.) Formteils in effizienter Weise erreichen, und das Faser-Flock-Material haftet fest auf der jeweiligen Material-Oberfläche.

Erfindungsgemäß besonders vorteilhaft und damit ganz besonders bevorzugt ist eine Vorgehensweise des Verfahrens, bei der man auf die gereinigte Oberfläche des Formprodukts, beispielsweise die keramische Oberfläche des Keramik-Formteils oder die Glas-Oberfläche des Glas-Formteils, zumindest eine Schablone aufbringt, die mit der mindestens einen Haftvermittler-Schicht und gegebenenfalls mit der mindestens einen Primer-Schicht und die mit der zumindest einen Klebeschicht zu versehenden Teile der keramischen Oberfläche des Keramik-Formteils auf die Teile begrenzt, auf denen das Faser-Flock-Material fest haften soll. Es kann eine Schablone verwendet werden, oder es können mehrere Schablonen verwendet werden. Bevorzugt ist die Verwendung einer Schablone. Eine solche Schablone deckt vorzugsweise die Teile der Oberfläche ab, die den Bereich/die Bereiche umgeben, auf dem/denen das Faser-Flock-Material fest haften soll, und läßt den Bereich/die Bereiche unbedeckt, auf dem/denen das Faser-Flock-Material fest haften soll. Beispielsweise kann eine solche Schablone (oder Manschette) ein Keramik-Formteil wie eine Porzellan-Tasse vollständig abdecken und nur den Henkel der Tasse freilassen, wenn nur dieser mit dem Faser-Flock-Material beaufschlagt werden soll. Gemäß einem anderen Beispiel kann eine solche Schablone für (beispielsweise) einen Porzellan-Becher die gesamte Außenwand des Bechers bedecken bis auf zwei in Umfangsrichtung einander gegenüberliegende quadratische Flächen, wenn auf der Außenwand des Bechers zwei einander gegenüberliegende quadratische Flächen aus Faser-Flock-Material aufgebracht werden sollen. Die von solchen (nur beispielhaft beschriebenen, nicht jedoch beschränkenden) Schablonen bedeckten Flächen werden weder mit Haftvermittler, noch mit Primer, noch mit Kleber beaufschlagt, während die von der Schablonen bzw. auch mehreren Schablonen freigelassenen Flächen sowohl mit dem mindestens einen Haftvermittler als auch mit dem mindestens einen Primer als auch mit dem mindestens einen Kleber beaufschlagt werden. Das Beaufschlagen der nicht abgedeckten Teile der Oberfläche des Keramik-Formteils mit dem mindestens einen Haftvermittler und/oder mit dem mindestens einen Primer und/oder mit dem mindestens einen Kleber erfolgt in einer mit Vorteil eingesetzten Ausführungsform des Verfahrens mittels Aufsprühen; dies stellt eine insbesondere für die Massenfertigung sehr wirtschaftliche Methode der Aufbringung dar.

Nach der Aufbringung des Klebers wird/werden die Schablone(n) vorzugsweise entfernt. Danach kann dann das zumindest eine Faser-Flock-Material aufgebracht werden. Dies kann in besonders wirtschaftlicher Weise ebenfalls durch Aufsprühen geschehen. Aufgrund der sauberen Begrenzung der Haftvermittler-Schicht(en), Primer-Schicht(en) und/oder Klebeschicht(en) haften die aufgesprühten Fasern des Faser-Flock-Materials im wesentlichen nur auf der Klebeschicht, d. h. dort, wo die Beaufschlagung mit dem Faser-Flock-Material intendiert ist. So ergibt sich bei diesem Vorgang der Beaufschlagung mit dem Faser-Flock-Material eine sauber abgegrenzte Schicht aus dem dekorativen, haptisch angenehmen und technische Wirkungen der Wärmeisolation erbringenden Faser-Flock-Material an einer oder mehreren Stellen der Oberfläche des Keramik-Formteils (oder auf dessen gesamter Oberfläche).

In gleicher Weise wie mit einer Schablone können Flächen des Formprodukts, beispielsweise des Keramik-Formteils oder des Glas-Formteils, die nicht mit Haftvermittler und/oder Primer und/oder Kleber und Faser-Flock-Material beaufschlagt werden sollen, mit einer Ummantelung aus einem geeigneten festen oder flüssigen, aber fest werdenden Material versehen werden, um die entsprechenden Flächen vor einem Auftrag der Materialien zu schützen. Nicht beschränkende Beispiele für ein derartiges Material sind Wachse, Silicon, Kautschuk, Gummi, selbstklebende Folien, um nur einige Beispiele zu nennen. Eine solche Ummantelung schützt die nicht zu beflockenden Stellen und spart bei der abschließenden Behandlung des Formprodukts Reinigungsschritte ein.

In einem abschließenden Behandlungsschritt härtet man vorzugsweise zumindest den zumindest mit dem Faser-Flock-Material beschichteten Teil der Oberfläche des Formprodukts, beispielsweise des Keramik-Formteils oder des Glas-Formteils, nach. Dies kann mit Vorteil durch Behandlung bei Raumtemperatur oder leicht erhöhter Temperatur geschehen, beispielsweise durch Trocknen der Klebeschicht durch Stehenlassen bei Raumtemperatur oder leicht erhöhter Temperatur. Alternativ kann man das Formprodukt, beispielsweise das Keramik-Formteil oder Glas-Formteil, mit dem aufgebrachten Faser-Flock-Material einem bei Raumtemperatur oder leicht erhöhter Temperatur befindlichen Gasstrom, beispielsweise einem Luftstrom, aussetzen. Vorzugsweise härtet man das gesamte, zumindest auf einem Teil seiner Oberfläche mit dem Faser-Flock-Material beschichtete Formprodukt, beispielsweise das Keramik-Formteil oder Glas-Formteil, nach, und noch weiter bevorzugt härtet man bei gegenüber Raumtemperatur geringfügig erhöhter Temperatur nach, am meisten bevorzugt bei Raumtemperatur. Die Härtungszeit beträgt bei Raumtemperatur (20 °C) etwa 72 h. Jedoch ist es möglich (und führt erfindungsgemäß sogar zu einer außerordentlich guten Haftung des Faser-Flock-Materials auf dem Formprodukt, beispielsweise auf dem Keramik-Formteil oder Glas-Formteil), die Härtung bei erhöhter Temperatur (von beispielsweise bis zu 80 °C in einem Trockenschrank) durchzuführen. Dabei sinkt die Härtungszeit bis auf 0,5 h.

Die Erfindung betrifft auch die Verwendung der wie vorstehend beschrieben hergestellten Formprodukte, beispielsweise der erfindungsgemäßen Keramik-Formteile, Glas-Formteile, Polymer-Formteile, Holz-Formteile, Metall-Formteile und Verbundmaterial-Formteile, für Haushaltszwecke, Laboratoriumszwecke oder industrielle Zwecke oder in der Baubranche. Darunter können beispielsweise Verwendungen von Keramik-Formteilen - vorzugsweise als Porzellan - als Eßgeschirr, Trinkgeschirr oder Kochgeschirr fallen. Wie oben beispielhaft beschrieben, können beispielsweise Tassen oder Becher aus Porzellan auf ihrer Oberfläche oder einem Teil oder mehreren Teilen davon mit einem oder mehreren Faser-Flock-Material(ien) versehen werden. Abgesehen von den optischen und haptischen Zwecken können die Tassen oder Becher so mit Flächen versehen werden, an denen man sie anfassen und auch halten kann, wenn deren Inhalt so heiß ist, daß er das restliche Gefäß auf eine Temperatur erhitzt, die ein Anfassen oder Halten nicht mehr erlaubt. Gleiches gilt beispielsweise für Eßgeschirr-Teile, z. B. aus Porzellan oder Kochgeschirr-Teile aus Porzellan. Selbst wenn sie externen Heizquellen (wie beispielsweise einer Mikrowelle oder Infrarot-Heizung zum Erhitzen) ausgesetzt wurden, können sie an den Stellen ihrer Oberfläche angefaßt werden, die erfindungsgemäß mit dem Faser-Flock-Material beaufschlagt sind. Weitere Verwendungs-Beispiele sind die Verwendung keramischer Formprodukte für Bedachungszwecke (Ziegel) oder als Boden- oder Wandbelag (Fliesen). Die Verwendung von Formprodukten mit (Teil-) Oberflächen, die die "normale" Oberfläche des Formprodukts hinsichtlich mindestens einer Eigenschaft auf zumindest einem Teil der Oberfläche ändern, kann auch um Bereich Sanitärkeramik erfolgen, beispielsweise bei Waschbecken, Toilettenschüsseln, Bidets Badewannen oder Duschtassen. Formprodukte aus Glas mit einer Beschichtung aus den vorgenannten, mindestens eine Oberflächen-Eigenschaft verändernden Materialien, nämlich erfindungsgemäß mit einer Faser-Flock-Beschichtung können angewendet werden als Haushaltsgläser (beispielsweise Trinkgläser), Teegläser (thermische Isolierung), Gläser zur Aufbewahrung von verschiedensten Gegenständen, beispielsweise Lebensmitteln, Glasflakons für Parfum, Isolierkannen für heiße oder kalte Flüssigkeiten, Spiegel und Scheiben.

Die vorgenannten Beispiele sind jedoch nicht zur Beschränkung der Erfindung gedacht, sondern nur zu deren beispielhafter Erläuterung.

## Patentansprüche

1. Formprodukt, umfassend
- auf zumindest einem Teil seiner Oberfläche zumindest ein fest haftendes Faser-Flock-Material, das mindestens eine Eigenschaft zumindest eines Teils der Formprodukt-Oberfläche verändert;
- eine oder mehrere die Haftung des Faser-Flock-Materials bewirkende Klebeschichte(n); und
- zwischen der Formprodukt-Oberflächeund der Klebeschicht mindestens eine durch physikalische Vorbehandlung gebildete Silicium haltige,zirkoniumhaltige, titanhaltige oder Phosphat- Haftvermittlerschicht

2. Formprodukt nach Anspruch 1, umfassend zwischen der Formprodukt-Oberfläche und der Klebeschicht darüber hinaus mindestens eine durch chemische Vorbehandlung gebildete Schicht.

3. Formprodukt nach Anspruch 1 oder Anspruch 2, worin der Kleber ein Zweikomponenten-Kleber ist, bevorzugt ein Zweikomponenten-Kleber auf Lösemittel-Basis ist.

4. Formprodukt nach einem der Ansprüche.1 bis 3, worin das Faser-Flock-Material ein Faser-Flock-Material ist, das wenigstens eine optische Eigenschaft, haptische Eigenschaft, thermische Eigenschaft, chemische Eigenschaft, biologische Eigenschaft oder eine Kombination aus wenigstens zwei der genannten Eigenschaften verändert.

5. Formprodukt nach einem der Ansprüche 1 bis 4, worin das Faser-Flock-Material in Form eines Films eines oder mehrerer Materialien oder einer Schicht eines oder mehrerer Materialien vorliegt.

6. Formprodukt nach einem der Ansprüche 1 bis 5, worin das Faser-Flock-Material synthetische Fasern umfaßt, vorzugsweise anorganische synthetische Fasern oder organische synthetische Fasern, besonders bevorzugt Fasern aus der Gruppe Mineralfasern, Gesteinsfasern, Kohlenstoff Fasern und Metall-Fasern als anorganische synthetische Fasern oder Fasern aus der Gruppe Polyester-Fasern und/oder Polyamid-Fasern als organische synthetische Fasern, am meisten bevorzugt Polyethylenterephthalat-Fasern bzw. Poly(hexamethylenadipinamid)-Fasern (Polyamid-6,6-Fasern).

7. Formprodukt nach Anspruch 6, worin das Faser-Flock-Material Polyester-Fasern und/oder Polyamid-Fasern einer mittleren Länge von 0,1 bis 10 mm, vorzugsweise von 0,1 bis 5 mm, weiter bevorzugt von 0,3 bis 3 mm, umfaßt, besonders bevorzugt das Polyamid-Faser-Flock-Material Polyamid 6.6-Schnittflock oder das Polyester-Faser-Flock-Material Polyester-(PET-)Schnittflock.

8. Formprodukt nach einem der Ansprüche 2 bis 7, worin die durch chemische Vorbehandlung gebildete Schicht eine Primer-Schicht, vorzugsweise eine Schicht aus der Gruppe Silicium-haltiger Primer ist.

9. Formprodukt nach einem der Ansprüche 1 bis 8, worin das Formprodukt ein Temperatür-gehärtetes Keramik-Formteil oder ein Glasformteil ist.

10. Formprodukt nach Anspruch 9, worin das Material des Keramik-Formteils ausgewählt ist aus der Gruppe, die besteht aus Grobkeramik und Feinkeramik, vorzugsweise aus der Gruppe, die besteht aus Irdengut, Steingut, Steinzeug und Porzellan.

11. Keramik-Formteil nach Anspruch 9 oder Anspruch 10, umfassend zwischen dem Keramik-Material und der Klebeschicht mindestens eine Glasur-Schicht, vorzugsweise mindestens eine Glasur-Schicht aus einem oder mehreren Grundmaterial(ien) aus der Gruppe Kaolin, Kalkspat, Dolomit, Feldspat, Kaolinschamotte und Quarzsand unter Beimischung von beispielsweise SnO₂ oder ZrO₂ für eine undurchsichtige, weiße Glasurschicht bzw. eines oder mehrere derselben Grundmaterialien aus der vorstehend genannten Gruppe unter Beimischung von Metalloxiden wie beispielsweise Cobaltoxid, Chromoxid, Kupferoxid, Manganoxid und/oder Eisenoxid für eine farbige Glasurschicht.

12. Keramik-Formteil nach einem der Ansprüche 9 bis 11, worin die durch physikalische Vorbehandlung gebildete, die Haftung vermittelnde Schicht zwischen dem Keramik-Material oder der Glasur-Schicht einerseits und der Klebeschicht andererseits angeordnet ist.

13. Glas-Formteil nach Anspruch 9, worin die durch physikalische Vorbehandlung gebildete, die Haftung vermittelnde Schicht zwischen dem Glasmaterial und der Klebeschicht angeordnet ist.

14. Keramik-Formteil oder Glas-Formteil nach einem der Ansprüche 9 bis 13 mit einer Beständigkeit gegen alkalisch-wäßrige Spüllösung von mindestens 1000 üblichen Geschirrspülmaschinen-Spül- und Trockengängen bei bis zu 65 °C.

15. Verfahren zur Herstellung eines auf zumindest einem Teil seiner Oberfläche ein fest haftendes, wenigstens eine Eigenschaft wenigstens eines Teils der Formprodukt-Oberfläche veränderndes Faser-Flock-Material umfassenden Formprodukts, das die folgenden Schritte umfasst:
**·** Herstellen eines Formprodukt-Rohlings mit definierter Struktur;
**·** gegebenenfalls Versehen des Formprodukt-Rohlings auf zumindest einem Teil seiner Oberfläche mit einer Glasur;
**·** Aufbringen auf zumindest einen Teil der Oberfläche des Formprodukt-Rohlings oder auf zumindest einen Teil der Glasur mindestens einer durch physikalische vorbehandlung gebildeten, siliciumhaltigen zirkoniumhaltigen, titanhaltigen oder Phosphat- Haftvermittlerschicht;
**·** Aufbringen auf zumindest einen Teil der Oberfläche eines oder mehrer die Haftung des Faser-Flock-Materials bewirkenden Klebeschicht(en); und
**·** Versehen zumindest eines Teils der Oberfläche des gegebenenfalls mit einer Glasur versehenen Formprodukt-Rohlings mit einem fest haftenden Faser-Flock-Material.

16. Verfahren nach Anspruch 15, worin man nach dem Aufbringen der Haftvermittler-Schicht(en) auf zumindest einen Teil der Haftvermittler-Schicht(en) mindestens eine durch chemische Vorbehandlung gebildete Schicht aufbringt.

17. Verfahren nach Anspruch 15 oder Anspruch 16 zur Herstellung eines auf zumindest einem Teil seiner Oberfläche ein fest haftendes Faser-Flock-Material umfassenden Temperatur-gehärteten Keramik-Formteils durch Herstellen eines Keramik-Formteil-Rohlings aus einem Keramik-Ausgangsmaterial, Trocknen und/oder Sintern des Keramik-Formteil-Rohlings und gegebenenfalls Versehen des so erhaltenen getrockneten und/oder gesinterten Keramik-Formteil-Rohlings auf zumindest einem Teil seiner Oberfläche mit mindestens einer Glasur und Härten der mindestens einen Glasur bei erhöhter Temperatur.

18. Verfahren nach Anspruch 15 oder Anspruch 16 zur Herstellung eines auf zumindest einem Teil seiner Oberfläche zumindest ein fest haftendes Faser-Flock-Material umfassenden Glas-Formteils durch Herstellen eines Glas-Formteil-Rohlings aus einem Glas-Ausgangsmaterial, Abkühlen und/oder Tempern des Glas-Formteil-Rohlings und gegebenenfalls Versehen des so erhaltenen abgekühlten und/oder getemperten Glas-Formteil-Rohlings auf zumindest einem Teil seiner Oberfläche mit mindestens einer Glasur und Härten der mindestens einen Glasur bei erhöhter Temperatur.

19. Verfahren nach einem der Ansprüche 15 bis 18, worin der Kleber ein Zweikomponenten-Kleber ist, bevorzugt ein Zweikomponenten-Kleber auf Lösemittel-Basis ist.

20. Verfahren nach einem der Ansprüche 15 bis 19, worin das Faser-Flock-Material in Form eines Films eines oder mehrerer Materialien oder einer Schicht eines oder mehrerer Materialien vorliegt.

21. Verfahren nach einem der Ansprüche 15 bis 20, worin das Faser-Flock-Material synthetische Fasern umfaßt, vorzugsweise anorganische synthetische Fasern oder organische synthetische Fasern, besonders bevorzugt Fasern aus der Gruppe Mineralfasern, Gesteinsfasern, Kohlenstoff-Fasern und Metall-Fasern als anorganische synthetische Fasern oder Fasern aus der Gruppe Polyester-Fasern und/oder Polyamid-Fasern als organische synthetische Fasern, am meisten bevorzugt Polyethylenterephthalat-Fasern bzw. Poly(hexamethylenadipinamid)-Fasern (Polyamid-6,6-Fasern).

22. Verfahren nach Anspruch 21, worin das Faser-Flock-Material Polyester-Fasern und/oder Polyamid-Fasern einer mittleren Länge von 0,1 bis 10 mm, vorzugsweise von 0,1 bis 5 mm, weiter bevorzugt von 0,3 bis 3 mm, umfaßt, besonders bevorzugt das Polyamid-Faser-Flock-Material Polyamid 6.6-Schnittflock oder das Polyester-Faser-Flock-Material Polyester-(PET-)Schnittflock.

23. Verfahren nach einem der Ansprüche Anspruch 16 bis 22, worin die durch chemische Vorbehandlung gebildete Schicht eine Primer-Schicht, vorzugsweise eine Schicht aus der Gruppe Silicium-haltiger Primer, ist.

24. Verfahren nach einem der Ansprüche 16 bis 23, worin man die keramische Oberfläche oder gegebenenfalls glasierte Oberfläche oder die Glas-Oberfläche vor dem Aufbringen des Faser-Flock-Materials reinigt, vorzugsweise in wäßriger Phase reinigt, noch mehr bevorzugt in alkalischwäßriger Phase reinigt.

25. Verfahren nach einem der Ansprüche 15 bis 24, worin das Aufbringen der mindestens einen die Haftung vermittelnden Schicht durch Beflammen erfolgt.

26. Verfahren nach einem der Ansprüche 15 bis 25, worin man die Klebeschichten nach dem Aufbringen der durch physikalische Vorbehandlung gebildeten, die Haftung vermittelnden Schicht und gegebenenfalls nach dem Aufbringen der durch chemische Vorbehandlung gebildeten Schicht und vor dem Aufbringen des Faser-Flock-Materials aufbringt.

27. Verfahren nach einem der Ansprüche 15 bis 26, wobei man auf die gereinigte Oberfläche des Formprodukt-Rohlings zumindest eine Schablone aufbringt, die die mit der Haftvermittler-Schicht und gegebenenfalls der Primer-Schicht und die mit der Klebeschicht zu versehenden Teile des Formprodukt-Rohlings auf die Teile begrenzt, auf denen das Faser-Flock-Material fest haften soll, vorzugsweise die Teile der Oberfläche abdeckt, die den Bereich/die Bereiche umgeben, auf dem/denen das Faser-Flock-Material fest haften soll, und den Bereich/die Bereiche unbedeckt läßt, auf dem/denen das Faser-Flock-Material fest haften soll.

28. Verfahren nach einem der Ansprüche 15 bis 27, wobei zumindest einer der Schritte Aufbringen der mindestens einen Haftvermittler-Schicht, Auf bringen der mindestens einen Primer-Schicht und Aufbringen der Klebeschicht durch Aufsprühen erfolgt.

29. Verfahren nach Anspruch 27 oder Anspruch 28, worin man die Schablone(n) entfernt, sobald zumindest die Klebeschicht aufgebracht wurde.

30. Verfahren nach einem der Ansprüche 15 bis 29, worin man das Faser-Flock-Material durch Sprühen aufbringt.

31. Verfahren nach einem der Ansprüche 15 bis 30, worin man zumindest den zumindest mit dem Faser-Flock-Material beschichteten Teil der Oberfläche des Keramik-Formteils oder Glas-Formteils nachhärtet, vorzugsweise worin man das gesamte, zumindest auf einem Teil seiner Oberfläche mit dem Faser-Flock-Material beschichtete Keramik-Formteil oder Glas-Formteil nachhärtet, weiter bevorzugt bei Raumtemperatur bis gegenüber Raumtemperatur geringfügig erhöhter Temperatur nachhärtet, noch mehr bevorzugt bei Raumtemperatur (ca. 20 °C) nachhärtet.

32. Verwendung eines Formprodukts, Keramik-Formteils oder Glas-Formteils nach einem der Ansprüche 1 bis 14 für Haushaltszwecke, Laboratoriumszwecke oder industrielle Zwecke oder in der Baubranche.

33. Verwendung eines Formprodukts, Keramik-Formteils oder Glas-Formteils nach Anspruch 32 als Eßgeschirr, Trinkgeschirr bzw. Trinkglas oder Kochgeschirr.

## Claims

1. Shaped product, comprising
- at least one fiber flock material firmly adhering on at least a portion of its surface area, said fiber flock material changing at least one property of at least a portion of the surface of said shaped product;
- one or more adhesive layer(s) effecting the adherence of the fiber flock material; and
- between the shaped product surface and the adhesive layer at least one silicon-containing, zirconium-containing, titanium-containing or phosphate bonding agent layer generated by physical pretreatment.

2. The shaped product according to claim 1, further comprising between the shaped product surface and the adhesive layer at least one layer generated by chemical pretreatment.

3. The shaped product according to claim 1 or claim 2, wherein the adhesive is a two-component adhesive, preferrably wherein the adhesive is a two-component adhesive based on solvents.

4. The shaped product according to any of the claims 1 to 3, wherein the fiber flock material is a fiber flock material changing at least one optical property, haptic property, thermal property, chemical property, biological property or a combination of at least two of the above properties.

5. The shaped product according to any of the claims 1 to 4, wherein the fiber flock material is present in the form of a film of one or more than one materials or in the form of a layer of one or more than one materials.

6. The shaped product according to any of the claims 1 to 5, wherein the fiber flock material comprises synthetic fibers, preferably inorganic synthetic fibers or organic synthetic fibers, particularly preferably fibers selected from the group consisting of mineral fibers, stone fibers, carbon fibers and metal fibers as inorganic synthetic fibers or fibers selected from the group consisting of polyester fibers and/or polyamide fibers as organic synthetic fibers, most preferably polyethylene terephthalate fibers or poly-(hexamethylene adipinamide) fibers (polyamide-6,6 fibers).

7. The shaped product according to claim 6, wherein the fiber flock material comprises polyester fibers and/or polyamide fibers having an average length of from 0.1 to 10 mm, preferably of from 0.1 to 5 mm, more preferably of from 0.3 to 3 mm, particularly preferably the polyamide fiber flock material "Polyamide-6,6 Cut Flock" or the polyester fiber flock material "Polyester (PET) Cut Flock".

8. The shaped product according to any of claims 2 to 7, wherein the layer generated by chemical pretreatment is a primer layer, preferably a layer of the group of silicon-containing primers.

9. The shaped product according to any of claims 1 to 8, wherein the shaped product is a temperature-hardened shaped ceramic article or a shaped glass article.

10. The shaped product according to claim 9, wherein the material of the shaped ceramic article is selected from the group consisting of coarse ceramic material and fine ceramic material, preferably selected from the group consisting of earthenware, stoneware, pottery and porcelain.

11. The shaped ceramic material according to claim 9 or claim 10, comprising between the ceramic material and the adhesive layer, at least one glaze layer, preferably at least one glaze layer comprising one or more than one of the basic materials selected from the group of kaolin, calcspar (calcite), dolomite, feldspar, kaolin fireclay and quartz sand containing admixed, for example, SnO₂ or ZrO₂ for an opaque white glazing layer or one or more than one of the same basic materials mentioned above and containing admixed metal oxides as, for example, cobalt oxide, chromium oxide, copper oxide, manganese oxide and/or iron oxide for a coloured glaze layer.

12. The shaped ceramic article according to any of the claims 9 to 11, wherein the bonding agent layer generated by physical pretreatment is arranged between the ceramic material or the glaze layer on the one hand and the adhesive layer on the other hand.

13. The shaped glass article according to claim 9, wherein the bonding agent layer generated by physical pretreatment is arranged between the glass material and the adhesive layer.

14. The shaped ceramic article or glass article according to any of claims 9 to 13, having a resistance to alkaline-aqueous dish-washing solutions of at least 1000 washing and drying courses in a usual automatic dishwasher at temperatures up to 65 °C.

15. A process for manufacturing a shaped product comprising, on at least a portion of its surface, a firmly adhering fiber flock material changing at least one property of at least a portion of the shaped product surface comprising the steps of
- manufacturing a crude shaped product having a defined structure;
- optionally providing said crude shaped product on at least a portion of its surface with a glaze;
- applying on at least a portion of the surface of said crude shaped product or at least a part of said glaze at least one silicon-containing, zirconium-containing, titanium-containing or phosphate bonding agent layer generated by physical pretreatment;
- applying on at least a portion of said surface one or more adhesive layer(s) effecting the adherence of the fiber flock material; and
- providing at least a portion of the surface of the crude shaped product, optionally provided with said slave, with a firmly adhering fiber flock material.

16. The process according to claim 15, wherein, after the application of the bonding agent layer(s), at least one layer generated by a chemical treatment is applied to at least a portion of the bonding agent layer(s).

17. The process according to claim 15 or claim 16 for manufacturing a temperature-hardened shaped ceramic article comprising, on at least a portion of its surface, at least one firmly adhering fiber flock material by the steps of manufacturing a crude shaped ceramic article from a ceramic raw material, drying and/or sintering the crude shaped ceramic article and optionally providing said dried and/or sintered crude shaped ceramic article thus obtained on at least a portion of its surface with at least one glaze and baking said at least one glaze at an elevated temperature.

18. The process according to claim 15 or claim 16 for manufacturing a shaped glass article comprising, on at least a portion of its surface, at least one firmly adhering fiber flock material by the steps of manufacturing a crude shaped glass article from a glass raw material, cooling and/or annealing the crude shaped glass article and optionally providing said cooled and/or annealed crude shaped glass article thus obtained on at least a portion of its surface with at least one glaze and baking said at least one glaze at an elevated temperature.

19. The process according to any of the claims 15 to 18, wherein the adhesive is a two-component adhesive, preferably wherein the adhesive is a two-component adhesive based on solvents.

20. The process according to any of the claims 15 to 19, wherein the fiber flock material is present in the form of a film of one or more than one materials or in the form of a layer of one or more than one materials.

21. The process according to any of the claims 15 to 20, wherein the fiber flock material comprises synthetic fibers, preferably inorganic synthetic fibers or organic synthetic fibers, particularly preferably fibers selected from the group consisting of mineral fibers, stone fibers, carbon fibers and metal fibers as inorganic synthetic fibers or fibers selected from the group consisting of polyester fibers and/or polyamide fibers as organic synthetic fibers, most preferably polyethylene terephthalate fibers or poly-(hexamethylene adipinamide) fibers (polyamide-6,6 fibers).

22. The process according to claim 21, wherein the fiber flock material comprises polyester fibers and/or polyamide fibers having an average length of from 0.1 to 10 mm, preferably of from 0.1 to 5 mm, more preferably of from 0.3 to 3 mm, particularly preferably the polyamide fiber flock material "Polyamide-6,6 Cut Flock" or the polyester fiber flock material "Polyester (PET) Cut Flock".

23. The process according to any of the claims 16 to 22, wherein the layer generated by chemical pretreatment is a primer layer, preferably a layer of the group of silicon-containing primers.

24. The process according to any of the claims 16 to 23, wherein the ceramic surface or the optionally glazed surface or the glass surface is cleaned before the application of the fiber flock material, preferably is cleaned in an aqueous phase, more preferably is cleaned in an alkaline-aqueous phase.

25. The process according to any of the claims 15 to 24, wherein the at least one bonding agent layer is applied by flame conditioning.

26. The process according to any of the claims 15 to 25, wherein the adhesive layers are applied after the application of the bonding agent layer generated by physical pretreatment and optionally after the application of the layer generated by chemical pretreatment and before the application of the fiber flock material.

27. The process according to any of the claims 15 to 26, wherein at least one template is applied to the cleaned surface of the crude shaped product which limits the portions of the crude shaped product to be provided with the bonding agent layer and optionally with the primer layer to those portions to which the fiber flock material is to be adhered firmly, and which preferably shields those parts of the surface which surround that portion/those portions to which the fiber flock material is to be adhered firmly, and leaves that portion/those portions unshielded to which the fiber flock material is to be adhered firmly.

28. The process according to any of the claims 15 to 27, wherein at least one of the steps application of the at least one bonding agent layer, application of the at least one primer layer and application of the adhesive layer is carried out by spaying.

29. The process according to claim 27 or claim 28, wherein the template(s) is/are removed as soon as at least the adhesive layer is applied.

30. The process according to any of the claims 15 to 29, wherein the fiber flock material is applied by spraying.

31. The process according to any of the claims 15 to 30, wherein at least the portion of the surface of the shaped ceramic article or shaped glass article coated at least with the fiber flock material is aftercured, preferably wherein the whole shaped ceramic article or shaped glass article coated on at least a portion of its surface with the fiber flock material is aftercured, more preferably wherein the aftercuring step is carried out at room temperature or at a temperature slightly elevated, compared to room temperature, even more preferably wherein the aftercuring step is carried out at room temperature (about 20 °C).

32. Use of a shaped product, shaped ceramic article or shaped glass article according to any of the claims 1 to 14 in the household, laboratory, or industrial fields or in the building construction field.

33. Use of a shaped product, shaped ceramic article or shaped glass article according to claim 32 as table ware, drinking vessel or drinking glass or cooking vessel.

## Revendications

1. Pièce de forme, comprenant :
- sur au moins une partie de sa surface au moins un matériau de flocage à fibres, adhérant fermement, modifiant au moins une priorité d'au moins une partie de la surface de la pièce de forme;
- une ou plusieurs couche(s) d'adhésif, provoquant l'adhésion du matériau de flocage à base de fibres;
- entre la surface de pièce de forme et la couche d'adhésif au moins une couche d'agent d'adhésion contenant du silicium, du zirconium, contenant du titane ou à base de phosphate, formée par un prétraitement physique.

2. Pièce de forme selon la revendication 1, comprenant de plus au moins une couche formée par prétraitement chimique, entre la surface de pièce de forme et la couche d'adhésif.

3. Pièce de forme selon la revendication 1 ou la revendication 2, l'adhésif étant un adhésif à deux composants, de préférence un adhésif à deux composants à base de solvant.

4. Pièce de forme selon l'une des revendications 1 à 3, dans laquelle le matériau de flocage à base de fibres est un matériau de flocage à base de fibres modifiant une propriété optique, une propriété haptique, une propriété thermique, une propriété chimique, une propriété biologique ou une combinaison d'au moins deux des propriétés citées.

5. Pièce de forme selon l'une des revendications 1 à 4, le matériau de flocage à base de fibres se présentant sous la forme d'un film d'un ou plusieurs matériaux, ou d'une couche d'un ou plusieurs matériaux.

6. Pièce de forme selon l'une des revendications 1 à 5, le matériau de flocage à base de fibres comprenant des fibres synthétiques, de préférence des fibres synthétiques non organiques ou des fibres synthétiques organiques, de façon particulièrement préférée des fibres issues du groupe des fibres minérales, des fibres de roche, des fibres de carbone et des fibres métalliques, en tant que fibres synthétiques non organiques, ou des fibres issues du groupe des fibres de polyester et/ou des fibres de polyamide en tant que fibres synthétiques organiques, de façon la mieux préférée des fibres de polyéthylène téréphthalate ou des fibres de polymérisation (hexaméthylène adipinamide) et fibres de polyamides 6,6).

7. Pièce de forme selon la revendication 6, dans laquelle le matériau de flocage à base de fibres comprend des fibres de polyester et/ou des fibres de polyamide, d'une longueur moyenne de 0,1 à 10 mm, de préférence de 0.1 à 5 mm, de façon mieux préférée de 0.3 a 3 mm, de façon particulièrement préférée le matériau de flocage à base de fibres de polyamide, le flocage à base de fibres découpées en polyamide 6,6, ou le matériau de flocage à base de fibres de polyester qu'est le flocage à fibres découpées en polyester (PET).

8. Pièce de forme selon l'une des revendications 2 à 7, la couche formée par prétraitement chimique étant une couche d'apprêt, de préférence une couche issue du groupe de produits d'apprêt contenant du silicium.

9. Pièce de forme selon l'une des revendications 1 à 8, dans laquelle la pièce de forme est une pièce de forme en céramique, ou une pièce de forme en verre, durcie par exposition à la température.

10. Pièce de forme selon la revendication 9, le matériau de la pièce de forme en céramique étant sélectionné dans le groupe composé de céramique grossière et céramique fine, de préférence dans le groupe composé de poterie, faïence, grès et porcelaine.

11. Pièce de forme en céramique selon la revendication 9 ou selon la revendication 10, comprenant, entre le matériau en céramique et la couche adhésive, au moins une couche d'émail, de préférence au moins une couche d'émail issu d'un ou de plusieurs matériaux de base du groupe du kaolin, spath calcaire, dolomite, feldspath, chamotte de kaolin et sable de quartz, avec mélange de, par exemple, SnO₂ ou ZrO₂, pour obtenir une couche de vernis blanche, non transparente, ou un ou plusieurs des mêmes matériaux de base issus du groupe cité ci-dessus, avec mélange d'oxydes métalliques, tel que, par exemple, de l'oxyde de cobalt, de l'oxyde de chrome, de l'oxyde de cuivre, de l'oxyde de manganèse et/ou d'oxyde de fer pour une couche de vernis colorée.

12. Pièce de forme en céramique selon l'une des revendications 9 à 11, dans laquelle la couche communiquant l'adhésion, formée par prétraitement physique, est disposée entre le matériau céramique, ou la couche de vernis, d'une part, et la couche d'adhésif, d'autre part.

13. Pièce de forme en verre selon la revendication 9, la couche formée par prétraitement physique, communiquant l'adhésion, étant disposée entre le matériau de verre et la couche d'adhésif.

14. Pièce de forme en céramique ou pièce de forme en verre selon l'une des revendications 9 à 13, ayant une résistance à une solution de rinçage alcalino-aqueuse, d'au moins 1000 passages en rinçage et séchage dans une machine à laver la vaisselle, à une température allant jusqu'à 65° C.

15. Procédé de fabrication d'une pièce de forme comprenant un matériau de flocage à fibres, adhérant fermement sur au moins une partie de sa surface, modifiant au moins une propriété d'au moins une partie de la surface de la pièce de forme, présentant les étapes suivantes :
- fabrication d'une ébauche de pièce de forme, ayant une structure définie;
- le cas échéant, garnissage par un vernis sur au moins une partie de la surface de l'ébauche de pièce de forme;
- application, sur au moins une partie de la surface de l'ébauche de pièce de forme, ou sur au moins une partie du vernis, d'au moins une couche d'agent d'adhésion contenant du silicium, du zirconium, contenant du titane ou à base de phosphate, formée par un prétraitement physique;
- application sur au moins une partie de la surface d'une ou plusieurs couches d'adhésif, provoquant l'adhésion du matériau de flocage à base de fibres;
- garnissage d'au moins une partie de la surface de l'ébauche de pièce de forme munie, le cas échéant, d'un vernis, avec un matériau de flocage à base de fibres, adhérant fermement.

16. Procédé selon la revendication 15, dans lequel, après l'application de la ou des couches d'agent d'adhésion, au moins une couche formée par prétraitement chimique est appliquée sur au moins une partie de la ou des couches d'agent d'adhésion.

17. Procédé selon la revendication 15 ou la revendication 16, pour la fabrication d'une pièce de forme en céramique, durcie par exposition à la température, comprenant, sur au moins une partie de sa surface, un matériau de flocage à base de fibres, adhérant fermement, par fabrication d'une ébauche de pièce de forme en céramique, à partir d'un matériau de départ en céramique, séchage et/ou frittage de l'ébauche de pièce de forme en céramique et, le cas échéant, garnissage de l'ébauche de pièce de forme en céramique séchée et/ou frittée ainsi obtenue, sur au moins une partie de sa surface, avec au moins un vernis, et durcissement du au moins un vernis à température augmentée.

18. Procédé selon la revendication 15 ou selon la revendication 16, pour la fabrication d'une pièce de forme en verre, comprenant sur au moins une partie de sa surface au moins un matériau de flocage à base de fibres, adhérant fermement, par fabrication d'une ébauche de pièce de forme en verre à partir d'un matériau de départ en verre, refroidissement et/ou recuit de l'ébauche de pièce de forme en verre et, le cas échéant, garnissage de l'ébauche de pièce de forme en verre refroidie et/ou recuite ainsi obtenue, sur au moins une partie de sa surface, avec au moins un vernis, et durcissement du au moins un vernis à température augmentée.

19. Procédé selon l'une des revendications 15 à 18, l'adhésif étant un adhésif à deux composants, de préférence un adhésif à deux composants à base de solvant.

20. Procédé selon l'une des revendications 15 à 19, dans lequel le matériau de flocage à base de fibres se présente sous la forme d'un film d'un ou plusieurs matériaux ou d'une couche d'un ou plusieurs matériaux.

21. Procédé selon l'une des revendications 15 à 20, dans lequel le matériau de flocage à base de fibres comprend des fibres synthétiques, de préférence des fibres synthétiques non organiques ou des fibres synthétiques organiques, de façon particulièrement préférée des fibres issues du groupe des fibres minérales, des fibres de roche, des fibres de carbone et des fibres métalliques, en tant que fibres synthétiques non organiques, ou des fibres issues du groupe de fibres de polyester et/ou de fibres de polyamide, en tant que fibres synthétiques, de manière la mieux préférée des fibres de polyéthylène téréphthalate ou des fibres de polymérisation(hexaméthylène adipinamide) (fibres de polyamide 6,6).

22. Procédé selon la revendication 21, dans lequel le matériau de flocage à base de céramique comprend des fibres de polyester et/ou des fibres de polyamide, d'une longueur moyenne de 0,1 à 10 mm, de préférence de 0,1 à 5 mm, de manière mieux préférée de 0,3 à 3 mm, de façon particulièrement préférée le matériau de flocage à base de fibres est un flocage à fibres coupées en polyamide à 6.6, ou la matériau de flocage à base de fibres de polyester est un flocage à fibres coupées de polyester (PET).

23. Procédé selon l'une des revendications 16 à 22, dans lequel la couche formée par prétraitement chimique est une couche d'apprêt, de préférence une couche issue du groupe de produits d'apprêt contenant du silicium.

24. Procédé selon l'une des revendications 16 à 23, dans lequel la surface en céramique ou, le cas échéant, la surface vernie, ou la surface en verre, est nettoyée avant l'application du matériau de flocage à base de fibres, de préférence nettoyée en une phase aqueuse, de façon encore mieux préférée nettoyée en une phase alcalino-aqueuse.

25. Procédé selon l'une des revendications 15 à 24, dans lequel l'application de la au moins une couche communiquant l'adhésion s'effectue par exposition à la flamme.

26. Procédé selon l'une des revendications 15 à 25, dans lequel on applique les couches d'adhésif, après application de la couche communiquant l'adhésion, formée par prétraitement physique et, le cas échéant, après application de la couche formée par prétraitement chimique, et avant application du matériau de flocage à base de fibres.

27. Procédé selon l'une des revendications 15 à 26, où l'on applique sur la surface nettoyée de l'ébauche de pièce de forme au moins un gabarit, qui, avec la couche d'agent d'adhésion et, le cas échéant, la couche de produit d'apprêt et les parties, à munir de la couche d'adhésion, de l'ébauche de pièce de forme, est délimité aux parties sur lesquelles le matériau de flocage à base de fibres doit adhérer fermement, de préférence en couvrant les parties de la surface entourant la zone/les zones, sur laquelle/lesquelles le matériau de flocage à base de fibres doit adhérer fermement, et laisse non couverte(s) la zone/les zones sur laquelle/lesquelles le matériau de flocage à base de fibres doit adhérer fermement.

28. Procédé selon l'une des revendications 15 à 27, où au moins l'une des étapes, d'application de la au moins une couche d'agent d'adhésion, d'application de la au moins une couche de produit d'apprêt et d'application de la couche d'adhésif, se fait par pulvérisation.

29. Procédé selon la revendication 27 ou la revendication 28, dans lequel on enlève le ou les gabarits dès qu'au moins la couche d'adhésif a été appliquée.

30. Procédé selon l'une des revendications 15 à 29, dans lequel on applique le matériau de flocage à base de fibres par pulvérisation.

31. Procédé selon au moins l'une des revendications 15 à 30, dans lequel au moins la partie, revêtue du matériau de flocage à base de fibres, de la surface de la pièce de forme en céramique ou de la pièce de forme en verre, est re-durcie, de préférence dans lequel on re-durcit l'ensemble de la pièce de forme en céramique ou de la pièce de forme en verre, revêtue au moins sur une partie de sa surface du matériau de flocage à base de fibres, de façon encore mieux préférée, on re-durcit à la température ambiante jusqu'à une température légèrement augmentée par rapport à la température ambiante, de façon encore mieux préférée, on re-durcit à la température ambiante (environ 20° C).

32. Utilisation d'une pièce de forme, d'une pièce de forme en céramique, ou d'une pièce de forme en verre, selon l'une des revendications 1 à 14, à des fins de ménage domestique, à des fins de laboratoire, ou à des fins industrielles ou dans la branche de la construction.

33. Utilisation d'une pièce de forme, d'une pièce de forme en céramique ou d'une pièce de forme en verre, selon la revendication 32, en tant que vaisselle à manger, vaisselle à boire, ou verre à boire ou vaisselle de cuisine.
